# EUROPEAN PATENT SPECIFICATION

(11) **EP 3 621 222 B1**
(45) Date of publication and mention of the grant of the patent: **21.10.2026**
(21) Application number: 18794805.4
(22) Date of filing: 27.04.2018
(51) Int. Cl.: H04L 5/00, H04L 1/00, H04W 72/04, H04W 72/12

(54) **METHOD FOR TRANSMITTING DOWNLINK CONTROL INFORMATION, TERMINAL, AND NETWORK SIDE DEVICE**
VERFAHREN ZUR ÜBERTRAGUNG VON DOWNLINK-INFORMATIONEN, ENDGERÄT UND NETZWERKSEITIGE VORRICHTUNG
PROCÉDÉ DE TRANSMISSION D'INFORMATIONS DE COMMANDE DE LIAISON DESCENDANTE, TERMINAL, ET DISPOSITIF CÔTÉ RÉSEAU

(30) Priority: 05.05.2017 CN 201710314145
(43) Date of publication of application: 11.03.2020
(73) Proprietor: Vivo Mobile Communication Co., Ltd., Dongguan, Guangdong 523860 (CN)
(72) Inventor: SHEN, Xiaodong, Dongguan Guangdong 523860 (CN); JI, Zichao, Dongguan Guangdong 523860 (CN); DING, Yu, Dongguan Guangdong 523860 (CN); LU, Zhi, Dongguan Guangdong 523860 (CN)
(74) Representative: Conti, Marco
(86) International application number: PCT/CN2018/084828
(87) International publication number: WO 2018/201987

(56) References cited:
- WO-A1-2017/026794
- CN-A- 102 395 206
- CN-A- 105 338 467
- US-A1- 2013 114 521
- US-A1- 2015 264 678
- US-A1- 2017 099 674
- VIVO: "Discussion on search space design supporting dynamic DCI size", vol. RAN WG1, no. Qingdao, P.R. China; 20170627 - 20170630, 26 June 2017 (2017-06-26), XP051299605, Retrieved from the Internet <URL:http://www.3gpp.org/ftp/Meetings_3GPP_SYNC/RAN1/Docs/> [retrieved on 20170626]
- CATT: "Principle of DL DCI formats design", vol. RAN WG1, no. Lisbon, Portugal; 20161010 - 20161014, 1 October 2016 (2016-10-01), XP051159139, Retrieved from the Internet <URL:http://www.3gpp.org/ftp/tsg_ran/WG1_RL1/TSGR1_86b/Docs/> [retrieved on 20161001]

## Description

### TECHNICAL FIELD

The present disclosure relates to a wireless communication technology, and more particularly, to a method of transmitting downlink control information, a terminal, and a network side device.

### BACKGROUND

In a Long Term Evolution (LTE) system, before a terminal device receives or transmits data, the terminal device needs to be informed of Downlink Control Information (DCI) configured by a network side device to the terminal device. The DCI is carried by a Physical Downlink Control Channel (PDCCH).

In a specific communication process, the terminal acquires the DCI by performing blind detection on the PDCCH, then according to a start symbol position of a Physical Downlink Shared Channel (PDSCH) and in conjunction with the DCI carried in the PDCCH, transmits data on the PDSCH.

In a New Radio Access Technology (NR) of the Fifth Generation Mobile Communication (5G), a DCI implementation is arranged more flexibly, for example, a length of the DCI is variable. If a blind detection method in the related art is used for the blind detection to acquire the DCI, an efficiency of the blind detection is low.

A U.S. patent publication No. 2013/0114521 A1 discloses a method in a network node for transmitting an enhanced control channel (eCCH) to a user equipment in a telecommunications system.

A 3GPP draft R1-1608793 by CATT (3GPP TSG RAN WG1 #86bis) discloses a principle of DL DCI formats design.

Another prior art example is described by U.S. patent publication No. 2017/099674 A1.

### SUMMARY

Scope of the present invention is to provide a method of transmitting downlink control information, a terminal and a network side device which improve the above mentioned prior art. This scope is achieved by the method, the terminal and the network side device according to the appended claims. In particular, some embodiments of the present disclosure provide a method of transmitting downlink control information, a terminal, and a network side device, to solve a problem that an efficiency of blind detection is low when an implementation of the DCI is flexibly set.

In the method of transmitting downlink control information, the terminal, and the network side device provided by the present disclosure, the terminal determines resource configuration information corresponding to a control resource set, and acquires at least one of a length of blind downlink control information (DCI), an aggregation level of candidate control channels and a length of Resource Allocation (RA) field in the DCI based on a first correspondence relation between the resource configuration information and the blind detection information. That is, without requiring the network side device to transmit the blind detection information, the terminal may acquire additional resource indication based on the first correspondence relation, and may dynamically acquire updated resource indication based on a change of a resource control set, so that a resource indication manner is more flexible, and the terminal may perform the targeted blind detection based on acquired at least one of the length of the DCI, the aggregation level of candidate control channels, and the length of the Resource Allocation (RA) field in the DCI. The efficiency of the blind detection is improved.

### BRIEF DESCRIPTION OF THE DRAWINGS

In order to more clearly illustrate technical solutions in the present disclosure or related art, accompany drawings used in description of embodiments or the related art will be briefly described below. Apparently, the accompany drawings in the following description are some embodiments of the present disclosure. For those of ordinary skills in the art, other drawings may also be acquired from these drawings without paying creative labor.
FIG. 1 is a schematic diagram of a system architecture for a method of transmitting downlink control information provided by the present disclosure;
FIG. 2 is a structural schematic diagram of a control resource set;
FIG. 3 is a schematic diagram of a Frequency-first mapping mode according to some embodiments of the present disclosure;
FIG. 4 is a schematic diagram of a Time-first mapping mode according to some embodiments of the present disclosure;
FIG. 5 is a schematic diagram of a distributed interleaving mode according to some embodiments of the present disclosure;
FIG. 6 is a schematic diagram of a localized interleaving mode according to some embodiments of the present disclosure;
FIG. 7 is a flowchart of a method of transmitting downlink control information provided by some embodiments of the present disclosure;
FIG. 8 is a flowchart of a method of transmitting downlink control information provided by some embodiments of the present disclosure;
FIG. 9 is a flowchart of a method of transmitting downlink control information provided by some embodiments of the present disclosure;
FIG. 10 is a schematic structural diagram of a terminal provided by some embodiments of the present disclosure;
FIG. 11 is a schematic structural diagram of a terminal provided by some embodiments of the present disclosure;
FIG. 12 is a schematic structural diagram of a network side device provided by some embodiments of the present disclosure;
FIG. 13 is a schematic structural diagram of a terminal provided by some embodiments of the present disclosure; and
FIG. 14 is a schematic structural diagram of a network side device provided by some embodiments of the present disclosure.

### DETAILED DESCRIPTION

In order to make objectives, technical solutions and advantages of the present disclosure clearer, the technical solutions in some embodiments of the present disclosure will be clearly and completely described below in conjunction with the accompanying drawings in some embodiments of the present disclosure. Obviously, the described embodiments are a part, rather than all, of the embodiments of the present disclosure. Based on the embodiments of the present disclosure, all other embodiments acquired by those of ordinary skills in the art without paying creative work are within the scope of the present disclosure.

Terms such as "include" and "have" and any variations thereof in the specification and claims of the present disclosure are intended to cover a non-exclusive inclusion, for example, a process, a method, a system, a product, a device including a series of steps or units need not be limited to those steps or units clearly listed, but may include other steps or units not clearly listed or inherent to these processes, methods, products or devices.

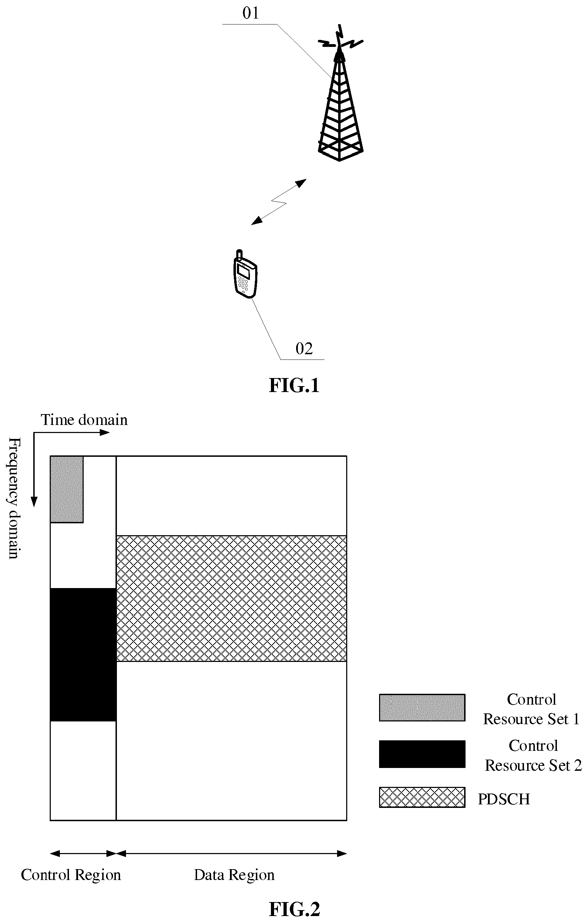

FIG. 1 is a schematic diagram of a system architecture for a method of transmitting downlink control information provided by the present disclosure. The system architecture shown in FIG. 1 includes a network side device 01 and a terminal 02.

The network side device 01 may be a Base Transceiver Station (BTS) in a Global System of Mobile communication (GSM) or a Code Division Multiple Access (CDMA), or may be a NodeB (NB) in Wideband Code Division Multiple Access (WCDMA), or may be an Evolutional Node B (eNB or eNodeB) in Long Term Evolution (LTE), or may also be a base station in a New radio access technology (new RAT or NR), or may be a relay station or an access point, or a base station in a future 5G network, or the like. The present disclosure is not limited thereto.

The terminal 02 may be a wireless terminal or a wired terminal. The wireless terminal may be a device that provides voice and/or other service data connectivity to a user, a handheld device with a wireless connection function being enabled, or another processing device connected to a wireless modem. The wireless terminal may communicate with one or more core networks via a Radio Access Network (RAN), and the wireless terminal may be a mobile terminal, such as a mobile phone (or referred to as a "cellular" phone) and a computer having a mobile terminal, for example, a portable mobile device, a pocket-sized mobile device, a hand-held mobile device, a computer-inbuilt or onboard mobile device, which exchange language and/or data with a wireless access network. For example, a Personal Communication Service (PCS) telephone, a cordless telephone, a Session Initiation Protocol (SIP) phone, a Wireless Local Loop (WLL) station, a Personal Digital Assistant (PDA), or the like. The wireless terminal may also be referred to as a system, a Subscriber Unit, a Subscriber Station, a Mobile Station, a Mobile, a Remote Station, a Remote Terminal, an Access Terminal, a User Terminal, a User Agent, a User Device or a User Equipment. The present disclosure is not limited thereto.

In a wireless communication system, a data channel of a terminal includes a Physical Downlink Shared Channel (PDSCH) for transmitting downlink data and a Physical Uplink Shared Channel (PUSCH) for transmitting uplink data. Both an uplink resource scheduling and a downlink resource scheduling of the data channel need to be notified to the terminal through Downlink Control Information (DCI). The DCI is carried by a Physical Downlink Control Channel (PDCCH).

In particular, in a NR of 5G, a basic time unit of the downlink resource scheduling is one slot. The scheduling within one slot consists of 7 or 14 Orthogonal Frequency Division Multiplexing (OFDM) symbols which are continuous in time. One slot may be divided into a control region and a data region. The PDSCH is transmitted in the data region of the slot, the PDCCH is transmitted in the control region of the slot, and a time-frequency resource in the slot used for the PDSCH is composed of Resource Blocks (RBs). In order to correctly receive the PDSCH, the terminal needs to first demodulate the PDCCH, the DCI carried by the PDCCH contains frequency-domain position information, i.e., downlink resource allocation information, indicating the RBs used for the PDSCH.

In the control region of a slot, one or more control resource sets (CORESET) are provided. The terminal may detect the PDCCH in one or more control resource sets. FIG. 2 is a structural schematic diagram of control resource sets. As shown in FIG. 2, a control region and a data region are included in one slot, and there are two control resource sets in the control region of the slot, and resource sizes of the two control resource sets in time domain and in frequency domain may be different.

A PDCCH in the NR is transmitted by using one or more (e.g., 1, 2, 4, 8) Control Channel Elements (CCEs). That is, a mapping of the PDCCH in the NR to time-frequency resources is based on a structure of a CCE, and a basic resource unit constituting the CCE is a Resource Element Group (REG). A CCE is composed of a certain number of REGs (e.g., 6 REGs). AREG includes a RB in frequency domain (i.e. 12 consecutive subcarriers) and an Orthogonal Frequency Division Multiplexing (OFDM) symbol in time domain.

There are many arrangements of REGs in a CCE which may be implemented specifically through a mapping mode and an interleaving mode of the REGs. The mapping mode and the interleaving mode of the REGs will be described below.

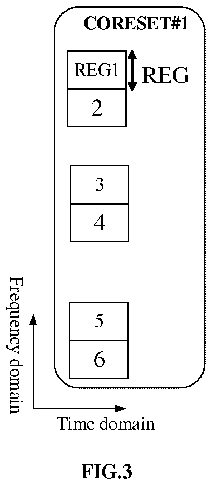

The mapping mode of the REGs includes Frequency-first and Time-first. For a Frequency-first mapping mode of a CCE to a REG, a mapping order of time-frequency resources of REGs constituting the CCE is frequency-domain-first and time-domain-second. The Frequency-first mapping mode has many specific mapping modes according to mapping of REGs to different frequency domains. FIG. 3 is a schematic diagram of a Frequency-first mapping mode according to some embodiments of the present disclosure. As shown in FIG. 3, six REGs are mapped to different frequency domains corresponding to a same time domain. FIG. 3 is only one of a variety of Frequency-first mapping modes.

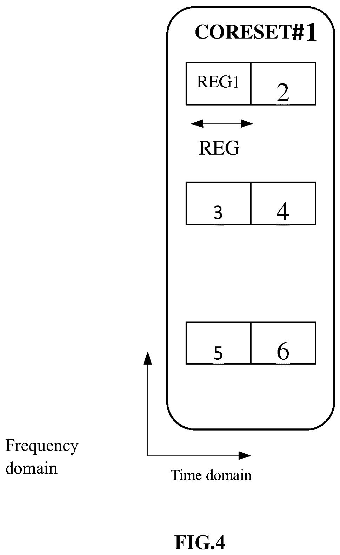

For a Time-first mapping mode of a CCE to a REG, a mapping order of time-frequency resources of REGs composing a CCE is time-domain-first and frequency-domain-second. The Time-first mapping mode has many specific mapping modes according to mapping of REGs to different time domains. FIG. 4 is a schematic diagram of a Time-first mapping mode according to some embodiments of the present disclosure. As shown in FIG. 4, REGs are mapped to two time-domain resources firstly, and then mapping in frequency-domain resources is performed. FIG. 4 is only one of a variety of Time-first mapping modes.

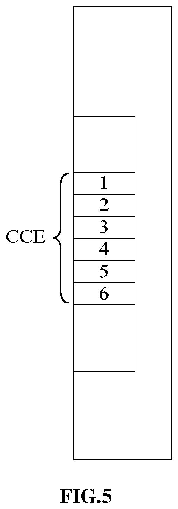

An interleaving mode of REGs includes a Distributed interleaving mode and a Localized interleaving mode. For the Localized interleaving mode of a CCE to a REG, an interleaving of REGs constituting a CCE in frequency domain is continuous. FIG. 5 is a schematic diagram of a Distributed interleaving mode in some embodiments of the present disclosure. As shown in FIG. 5, the CCE is composed of 6 consecutive REGs.

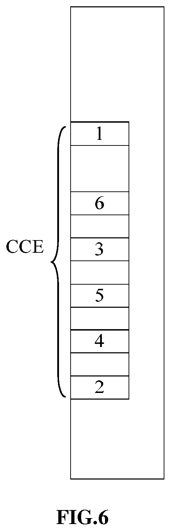

For a Distributed interleaving mode of a CCE to a REG, an interleaving of REGs constituting a CCE in frequency domain is discontinuous. FIG. 6 is a schematic diagram of a localized interleaving mode in some embodiments of the present disclosure. As shown in FIG. 6, the CCE is composed of 6 discontinuous REGs. It may be understood by those skilled in the art that the Distributed interleaving mode of REGs may be diversified, and the present disclosure is not particularly limited thereto.

In a LTE system, resources used for the PDSCH may be determined according to a following method and configuration: a bitmap in the DCI of the PDCCH is used to indicate a position of a Resource Block Group (RBG) allocated to the PDSCH, wherein the RBG is a set of continuous RBs in frequency domain. A size of a RBG (i.e., the number of RBs included in each RBG) is related to a downlink system bandwidth ${N}_{RB}^{DL}$ as shown in Table 1:

**Table 1**

| **System bandwidth** | **RBG size** |
|---|---|
| ${N}_{RB}^{DL}$ | **(*P*)** |
| ≤10 | 1 |
| 11 - 26 | 2 |
| 27 - 63 | 3 |
| 64 - 110 | 4 |

For a system bandwidth ${N}_{RB}^{DL}$ and a RBG having a size P, a corresponding Resource Assignment (RA) field, i.e., the bitmap, contains a total of $\left⌈{N}_{RB}^{DL}/P\right⌉$ bits, and each bit corresponds to one RBG. If a certain RBG is allocated to the PDSCH, a corresponding bit in the bitmap is set to 1; otherwise, the corresponding bit is set to 0.

For example, in case of the system bandwidth ${N}_{RB}^{DL} = 25 RBs$, it may be acquired by searching the table that a size P of the RBG is 2, i.e., P= 2, then the bitmap contains a total of $\left⌈{N}_{RB}^{DL}/P\right⌉ = 13$ bits, and each bit represents two frequency-domain continuous RBs corresponding to one RBG. Assuming that a resources allocation bitmap for the PDSCH is 1001110100010, then the PDSCH is allocated to RBG resources numbered 0, 3, 4, 5, 7, 11.

In the 5G NR, an implementation of the DCI is set more flexibly, and the length of the DCI may be changed according to different scenarios, i.e., different DCIs have different lengths. In addition, a length of the Resource Allocation (RA) field in the DCI is also variable, and the RA is the bitmap in the DCI. Meanwhile, an aggregation level of candidate control channels also includes a plurality of types, for example, aggregation levels 1, 2, 4, 8. If the terminal adopts the blind detection method in the related art, the terminal needs to perform the blind detection according to the lengths of all DCIs, all RA lengths, and all aggregation levels, which will result in a very low efficiency of the blind detection.

Some embodiments of the present disclosure provide a method of transmitting downlink control information, wherein additional blind detection information are carried through a CORESET resource or different mapping modes or interleaving modes of REGs, so as to reduce the number of times of the blind detection, improve an efficiency of the blind detection. The following description is provided by using detailed examples.

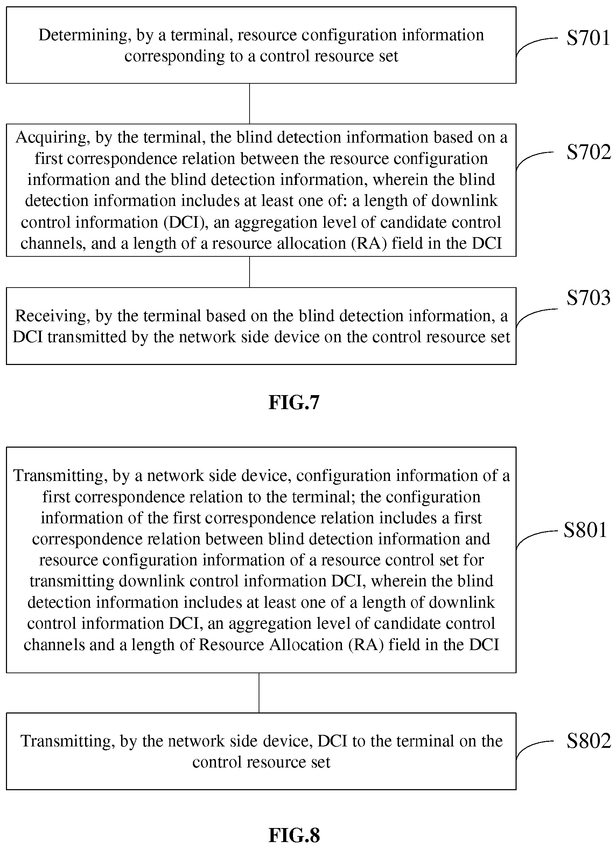

FIG. 7 is a flowchart of a method of transmitting downlink control information provided by some embodiments of the present disclosure. An execution entity of the transmission method is the terminal in the above embodiment, and as shown in FIG. 7, the method includes steps S701-S703.

S701: determining, by the terminal, resource configuration information corresponding to a control resource set.

In a specific implementation process, as shown in FIG. 2, there may be one or more control resource sets available to the terminal. The resource configuration information of each of the control resource sets available to the terminal may be pre-defined; or a correspondence relation between the resource configuration information and one or more of a system bandwidth, a subcarrier spacing, an antenna configuration, and a carrier frequency may be pre-defined, and the terminal may determine the resource configuration information of each of the available control resource sets according to the correspondence relation.

Optionally, the terminal may also receive resource configuration information corresponding to each of the at least one control resource set transmitted by the network side device. Specifically, the network side device may transmit the resource configuration information corresponding to each control resource set to the terminal through a higher-layer signaling, or the network side device may transmit the resource configuration information corresponding to each of the control resource sets to the terminal through a broadcast channel, system information, or the like. In this embodiment, a specific implementation that the network side device transmits the resource configuration information to the terminal is not particularly limited.

After the terminal acquires the resource configuration information corresponding to each control resource set, the terminal monitors at least one control resource set according to the resource configuration information corresponding to each control resource set, so as to determine a control resource set for transmitting the DCI. Specifically, the resource configuration information includes an identifier of a control resource set, the identifier of the control resource set is used to indicate a time-domain position and/or a frequency-domain position of the control resource set. The terminal monitors the time-domain position and/or the frequency-domain position of each control resource set so as to determine a control resource set of the DCI for the terminal, the process is equivalent to a blind detection process. That is, the control resource set of the DCI for the terminal is determined by the blind detection process.

After the terminal determines the control resource set for transmitting the DCI, the terminal determines resource configuration information corresponding to the control resource set according to the control resource set for transmitting the DCI. That is, in this embodiment, the resource configuration information determined by the terminal is resource configuration information of a control resource set for transmitting the DCI to the terminal.

S702: acquiring, by the terminal, the blind detection information based on a first correspondence relation between the resource configuration information and the blind detection information, wherein the blind detection information includes at least one of: a length of downlink control information (DCI), an aggregation level of candidate control channels, and a length of a resource allocation (RA) field in the DCI.

The resource configuration information may include an identifier of a control resource set, and the identifier of the control resource set is used for indicating a time-domain position and/or a frequency-domain position of the control resource set. The identifier may be, for example, the numbering of the control resource set. For example, a numbering 1 and a numbering 2 of control resource sets shown in FIG. 2 indicate different control resource sets. Those skilled in the art will appreciate that different control resource sets may be configured with overlapping resources.

The resource configuration information may include a mapping mode of REGs in the control resource set, as described above with reference to FIG. 3 and FIG. 4.

The resource configuration information may include an interleaving mode of REGs in the control resource set, as described above with reference to FIG. 5 and FIG. 6.

In the embodiment shown in FIG. 7, a length of the downlink control information (DCI) is no longer fixed. Different DCI formats may have different lengths of the DCIs. Optionally, a same DCI format may have different lengths. The DCI is provided with a Resource Allocation (RA) field for indicating RBG resources allocated to the PDSCH, as described in Table 1 above. A length of the RA field is also variable. An aggregation level of candidate control channels may include 1, 2, 4, 8, and the like.

In the embodiment shown in FIG. 7, the resource configuration information and the blind detection information have a first correspondence relation. That is, at least one of the identifier of the control resource set, the mapping mode of REGs, and the interleaving mode of REGs has a correspondence relation with at least one of the length of the DCI, the aggregation level of the candidate control channels, and the length of the RA.

The terminal may acquire the length of the DCI, the aggregation level of the candidate control channels, the length of the RA, and the like, based on the first correspondence relation.

The first correspondence relation may be predefined by a protocol, or may be transmitted to the terminal by the network side device.

S703: receiving, by the terminal based on the blind detection information, a DCI transmitted by the network side device on the control resource set.

After the terminal acquires the blind detection information, the terminal may perform detection based on the blind detection information, so as to receive the DCI transmitted by the network side device on the control resource set. Specifically, the terminal does not need to perform the blind detection with respect to all lengths of DCIs, all aggregation levels of candidate control channels, and all lengths of RAs, but the terminal only needs to perform a targeted blind detection with respect to the length of the DCI, the aggregation level of candidate control channels and the length of RA determined based on the first correspondence relation, to reduce the number of times of blind detection and improve the efficiency of blind detection.

In the method of transmitting downlink control information provided by the present disclosure, the terminal determines resource configuration information corresponding to a control resource set, and acquires at least one of a length of blind downlink control information (DCI), an aggregation level of candidate control channels and a length of Resource Allocation (RA) field RA in the DCI based on a first correspondence relation between the resource configuration information and the blind detection information. That is, without requiring the network side device to transmit the blind detection information, the terminal may acquire additional resource indication based on the first correspondence relation, and may dynamically acquire updated resource indication based on a change of a resource control set, so that a resource indication manner is more flexible, and the terminal may perform the targeted blind detection based on acquired at least one of the length of the DCI, the aggregation level of candidate control channels, and the length of the Resource Allocation (RA) field in the DCI. The efficiency of the blind detection is improved.

FIG. 8 is a flowchart of a method of transmitting downlink control information provided by some embodiments of the present disclosure. An execution entity of the method is a network side device described above, and as shown in FIG. 8, the method includes S801-S802.

S801: transmitting, by the network side device, configuration information of a first correspondence relation to the terminal. The configuration information of the first correspondence relation includes a first correspondence relation between blind detection information and resource configuration information of a resource control set for transmitting downlink control information DCI, wherein the blind detection information includes at least one of a length of downlink control information DCI, an aggregation level of candidate control channels and a length of Resource Allocation (RA) field in the DCI.

S802: transmitting, by the network side device, DCI to the terminal on the control resource set.

The network side device transmits at least one piece of resource configuration information corresponding to at least one control resource set to the terminal. The network side device subsequently transmits DCI to the terminal on one of the at least one control resource set.

The network side device may also transmit the first correspondence relation between the resource configuration information of the control resource set and the blind detection information to the terminal. A specific implementation of the first correspondence relation may be obtained from the above description with reference to FIG. 7, and the present disclosure is not particularly limited herein.

It may be understood by those skilled in the art that the above two kinds of information may be transmitted by a higher-layer signaling, or may be transmitted by two higher-layer signalings, respectively. A specific transmission process of the above two kinds of information in this embodiment is not particularly limited.

The network side device transmits DCI to the terminal on one of the control resource sets allocated to the terminal. A specific process of acquiring the DCI by the terminal may be obtained from the above description in conjunction with FIG. 7, and is not repeated in the present disclosure.

In the present disclosure, the network side device transmits configuration information of the first correspondence relation to the terminal, wherein the configuration information of the first correspondence relation includes the first correspondence relation between resource configuration information of a control resource set for transmitting downlink control information DCI and blind detection information, wherein the blind detection information includes at least one of a length of downlink control information DCI, an aggregation level of candidate control channels, and a length of a Resource Allocation (RA) field in the DCI; the network side device transmits DCI to the terminal on a control resource set, that is, the network side device indicates to the terminal a targeted range of the blind detection, thereby reducing the number of times of blind detection performed by the terminal and improving the efficiency of the blind detection.

Hereinafter, a specific implementation of the first correspondence relation will be described in detail by using a specific embodiment.

In one possible implementation, the resource configuration information includes an identifier of a control resource set, and the first correspondence relation includes at least one correspondence relation of the following: a correspondence relation between the identifier of the control resource set and a length of DCI; a correspondence relation between the identifier of the control resource set and an aggregation level of candidate control channels; and a correspondence relation between the identifier of the control resource set and a length of a RA.

Those skilled in the art may understand that, since the resource configuration information includes the identifier of the control resource set, when the resource configuration information includes only the identifier of the control resource set, the resource configuration information may be equivalent to the identifier of the control resource set. In such a case, a concept of the resource configuration information may not be introduced, and the network side device may directly transmit the identifier of the control resource set corresponding to each of the at least one control resource set to the terminal, or the identifier of the control resource set corresponding to each of the at least one control resource set may be agreed through a protocol.

The terminal determines the identifier corresponding to the control resource set, and the terminal acquires the blind detection information based on a first correspondence relation between the identifier of the control resource set and the blind detection information.

Specifically, identifiers of different control resource sets correspond to different lengths of DCI, and an identifier of each control resource set corresponds to at least one length of DCI. For example, an identifier 1 of a control resource set may correspond to two lengths of DCI which are A bits and B bits, respectively, and an identifier 2 of a control resource set may correspond to three lengths of DCI which are C bits, D bits, and E bits, respectively. Those skilled in the art may understand that the identifier 1 of the control resource set and the identifier 2 of the control resource set correspond to different lengths of DCI, which may also be understood to be a case that the lengths of DCI corresponding to the identifier 1 and the identifier 2 may be completely or partially different.

In a case that the terminal determines that the control resource set for transmitting DCI is a control resource set 1, the terminal only needs to perform blind detection with respect to lengths of DCI being A bits and B bits, without needing to perform blind detection with respect to lengths of DCI being C bits, D bits, and E bits. Thus, the number of times of blind detection is reduced and the efficiency of blind detection is improved.

Different identifiers of control resource sets correspond to different aggregation levels of candidate control channels, and each identifier of a control resource set correspond to at least one aggregation level of candidate control channels. For example, an identifier 1 of a control resource set corresponds to aggregation levels 1 and 2 of candidate control channels, and an identifier 2 of a control resource set corresponds to aggregation levels 4 and 8 of candidate control channels. Those skilled in the art may understand that the identifier 1 of a control resource set and the identifier 2 of a control resource set corresponds to different aggregation levels of candidate control channels, which may also be understood to be a case that the aggregation levels of candidate control channels corresponding to the two identifiers may be completely or partially different.

In a case that the terminal determines that the control resource set for transmitting DCI is the control resource set 1, the terminal only needs to perform blind detection with respect to the aggregation levels 1 and 2 of candidate control channels, without needing to perform blind detection with respect to the aggregation levels 4 and 8 of the candidate control channels. Thus, the number of times of blind detection is reduced, and the efficiency of blind detection is improved.

Different identifiers of control resource sets correspond to different lengths of RAs, and each identifier of a control resource set corresponds to respective lengths of at least one RA. For example, the identifier 1 of a control resource set may correspond to two lengths of the RA which are F bits and G bits, respectively, and the identifier 2 of a control resource set may correspond to three lengths of the RA, which are H bits, I bits, and J bits, respectively. Those skilled in the art may understand that the identifier 1 of the control resource set and the identifier 2 of the control resource set correspond to different lengths of RA, which may also be understood as a case that the lengths of RA corresponding to the two identifiers may be completely or partially different.

When the terminal determines that the control resource set for transmitting DCI is the control resource set 1, the terminal only needs to perform blind detection with respect to the lengths of RA being F bits and G bits, without needing to perform blind detection with respect to the lengths of RA being H bits, I bits and J bits. Thus, the number of times of blind detection is reduced, and the efficiency of blind detection is improved.

In one possible implementation, the resource configuration information includes an interleaving mode of Resource Element Groups (REGs) in a control resource set, and the first correspondence relation includes at least one correspondence relation of the following: a correspondence relation between the interleaving mode of REGs and a length of DCI; a correspondence relation between the interleaving mode of REGs and an aggregation level of candidate control channels; and a correspondence relation between the interleaving mode of REGs and a length of RA.

Those skilled in the art may understand that, since the resource configuration information includes an interleaving mode of REGs in a control resource set, when the resource configuration information includes only the interleaving mode of REGs in the control resource set, the resource configuration information may be equivalent to the interleaving mode of REGs in the control resource set. In such a case, a concept of the resource configuration information may not be introduced, and the network side device may directly transmit the interleaving mode of REGs corresponding to each of at least one control resource set to the terminal, or the interleaving mode of REGs corresponding to each of at least one control resource set may be agreed through a protocol.

The terminal determines the interleaving mode of REGs corresponding to a control resource set, and the terminal acquires the blind detection information based on the first correspondence relation between the interleaving mode of REGs corresponding to the control resource set and the blind detection information.

As may be seen from FIG. 5 and FIG. 6, the interleaving mode of REGs may have multiple types, and different interleaving modes correspond to different lengths of DCI, and each interleaving mode corresponds to at least one length of DCI; different interleaving modes correspond to different aggregation levels of control channels, and each interleaving mode corresponds to at least one aggregation level; different interleaving modes correspond to different lengths of RA, and each interleaving mode corresponds to at least one length of RA. In a specific implementation process, various interleaving modes may be represented by identifiers of the interleaving modes; and correspondence relations between an interleaving mode and a length of DCI, between an interleaving mode and an aggregation level of candidate control channels, and between an interleaving mode and a length of RA, are similar to the correspondence relations between an identifier of a control resource set and a length of DCI, between an identifier of a control resource set and an aggregation level of candidate control channels, and between an identifier of a control resource set and a length of RA, and a detailed description of the correspondence relations may be obtained from the above embodiments, and is not repeated in this embodiment.

In one possible implementation, the resource configuration information includes a mapping mode of Resource Element Group (REG) in a control resource set, and the first correspondence relation includes at least one correspondence relation of the following: a correspondence relation between a mapping mode of a REG and a length of DCI; a correspondence relation between a mapping mode of REGs and an aggregation level of control channels, and a correspondence relation between a mapping mode of REGs and a length of RA.

Those skilled in the art may understand that, since the resource configuration information includes a mapping mode of REGs in a control resource set, when the resource configuration information includes only the mapping mode of REGs in the control resource set, the resource configuration information may be equivalent to the mapping mode of REGs in the control resource set. In such a case, a concept of the resource configuration information may not be introduced, and the network side device may directly transmit a mapping mode of REGs corresponding to each of at least one control resource set to the terminal, or the mapping mode of REGs corresponding to each of at least one control resource set may be agreed through a protocol.

The terminal determines the mapping mode of REGs corresponding to a control resource set, and the terminal acquires the blind detection information based on the first correspondence relation between the mapping mode of REGs corresponding to the control resource set and the blind detection information.

As may be seen from FIG. 3 and FIG. 4, the mapping mode of REGs may have multiple types, and different mapping modes correspond to different lengths of DCI, and each mapping mode corresponds to at least one length of DCI; different mapping modes correspond to different aggregation levels of control channels, and each mapping mode corresponds to at least one aggregation level; different mapping modes correspond to different lengths of RA, and each mapping mode corresponds to at least one length of RA. In a specific implementation process, various mapping modes may be represented by identifiers of the mapping modes; and correspondence relations between a mapping mode and a length of DCI, between a mapping mode and an aggregation level of candidate control channels, and between a mapping mode and a length of RA, are similar to the correspondence relations between an identifier of a control resource set and a length of DCI, between an identifier of a control resource set and an aggregation level of candidate control channels, and between an identifier of a control resource set and a length of RA, and a detailed description of the correspondence relations may be obtained from the above embodiments, and is not repeated in this embodiment.

Those skilled in the art may understand that, in the above implementations, the network side device may directly transmit the first correspondence relation between the blind detection information and at least one of an identifier, an interleaving mode of REGs, and a mapping mode of REGs corresponding to each of at least one control resource set to the terminal, or the mapping mode of REGs corresponding to each of at least one control resource set may be agreed through a protocol.

The terminal determines at least one of an identifier, an interleaving mode of REGs, and a mapping mode of REG corresponding to a control resource set, and then determines blind detection information based on the first correspondence relation.

Optionally, in the description made in conjunction with FIG. 7 and FIG. 8, the blind detection information includes the length of DCI, the DCI includes the Resource Allocation (RA) field. In such a case, the length of RA is not included in the blind detection information.

After the terminal acquires the length of DCI based on the first correspondence relation, the terminal acquires the length of RA based on a second correspondence relation between a length of DCI and a length of RA.

The terminal receives, according to the length of DCI and the length of RA, DCI transmitted by the network side device on the control resource set.

The second correspondence relation may be predetermined by a protocol; or the network side device may transmit configuration information of a second correspondence relation to the terminal, and the terminal may receive the configuration information of the second correspondence relation transmitted by the network side device, wherein the configuration information of the second correspondence relation includes the second correspondence relation.

In the method provided by the present disclosure, a more direct correspondence relation is established between a length of DCI and a length of RA, and a length of one DCI corresponds to a length of one RA, so that the terminal needs to perform blind detection according to the length of one RA, and thus the number of times of blind detection is reduced and the efficiency of blind detection is improved.

Optionally, on a basis of the above embodiment, after the terminal acquires the length of RA, the terminal may determine a system bandwidth or the size of a RBG for transmitting the PDSCH according to the length of the RA. Referring to the embodiment corresponding to Table 1, for the system bandwidth ${N}_{RB}^{DL}$, for the RBG having the size P, the corresponding bitmap contains a total of $\left⌈{N}_{RB}^{DL}/P\right⌉$ bits, and each bit corresponds to one RBG.

The length of RA is the number of bits contained in the bitmap. When the system bandwidth is known to be 100 RBs, if the bitmap has 25 bits, the size of a RBG is known to be 4, i.e., one RBG contains 4 RBs. When the size of a RBG is known to be 3, if the bitmap has 20 bits, then the system bandwidth may be known to be 60 RBs.

The terminal acquires the size of a RBG or the system bandwidth according to the RA, so that the terminal may perform a targeted reception of data transmitted on the PDSCH.

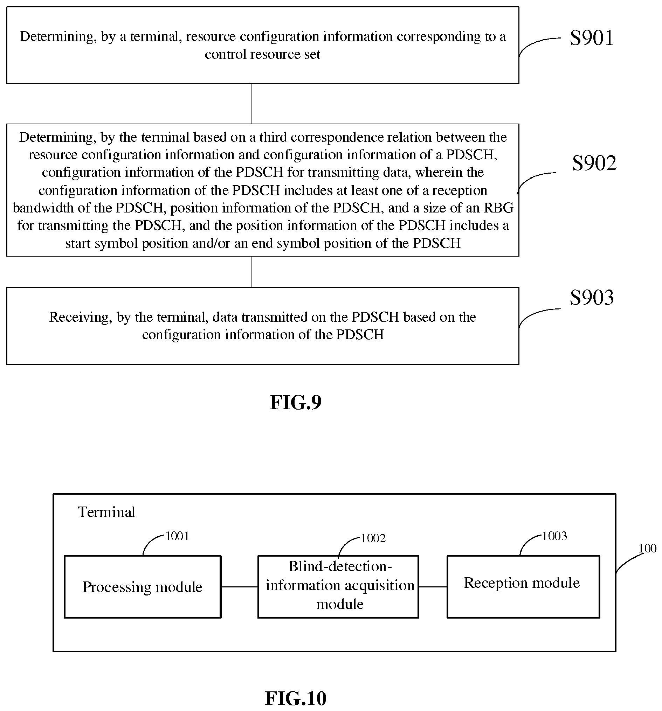

FIG. 9 is a flowchart of a method of transmitting downlink control information provided by some embodiments of the present disclosure. As shown in FIG. 9, an execution entity of the method is the terminal described above, and the method includes S901-S903.

S901: determining, by the terminal, resource configuration information corresponding to a control resource set.

S902: determining, by the terminal based on a third correspondence relation between the resource configuration information and configuration information of a PDSCH, configuration information of the PDSCH for transmitting data, wherein the configuration information of the PDSCH includes at least one of a reception bandwidth of the PDSCH, position information of the PDSCH, and a size of an RBG for transmitting the PDSCH, and the position information of the PDSCH includes a start symbol position and/or an end symbol position of the PDSCH.

S903: receiving, by the terminal, data transmitted on the PDSCH based on the configuration information of the PDSCH.

An implementation of S901 may be obtained from related description of S701 in FIG. 7, which will not be repeated herein.

In the present disclosure, the resource configuration information of the control resource set further has a third correspondence relation with the configuration information of the PDSCH. The third correspondence relation may be pre-agreed by a protocol. Configuration information of the third correspondence relation may also be transmitted by the network side device to the terminal, and the terminal may receive the configuration information of the third correspondence relation transmitted by the network side device.

The configuration information of the PDSCH includes at least one of a reception bandwidth of the PDSCH, position information of the PDSCH, and a size of an RBG for transmitting the PDSCH. The resource configuration information includes at least one of an identifier of a control resource set, a mapping mode of REGs, an interleaving mode of REGs, i.e., at least one of the identifier of the control resource set, the mapping mode of REGs, and the interleaving mode of REGs has a correspondence relation with at least one of the reception bandwidth of the PDSCH, the position information of the PDSCH, and the size of the RBG for transmitting the PDSCH.

The terminal may adjust a radio frequency bandwidth of the terminal based on the reception bandwidth of the PDSCH. The terminal may receive data at a corresponding position of the PDSCH based on the position information of the PDSCH. After the terminal determines the size of the RBG, the terminal may determine the system bandwidth based on the size of the RBG and a length of a bitmap in DCI. For example, in conjunction with description of the embodiment corresponding to Table 1 above, the size of the RBG is P = 2, the length of the bitmap in the DCI is 13 bits, and the system bandwidth is 26 RBs.

The terminal may also perform targeted reception of data based on the DCI acquired in the above embodiment and the acquired configuration information of the PDSCH, so that the terminal may receive data transmitted on the PDSCH in a power-saving manner and in a fast manner.

Those skilled in the art may understand that the implementation of acquiring DCI in the present disclosure may be the above-mentioned implementation of acquiring DCI, and in a specific implementation process, the DCI may also be acquired in other ways. The present disclosure does not particularly limit the implementation of acquiring DCI. After the terminal acquires the configuration information of the PDSCH, the terminal may receive data transmitted on the PDSCH based on the configuration information of the PDSCH and the acquired DCI.

In the present disclosure, the terminal determines configuration information of a PDSCH for transmitting data based on a third correspondence relation between resource configuration information and the configuration information of the PDSCH, wherein the configuration information of the PDSCH includes at least one of a reception bandwidth of the PDSCH, position information of the PDSCH, and a size of a RBG for transmitting the PDSCH, and the position information of the PDSCH includes a start symbol position and/or an end symbol position of the PDSCH. The terminal may acquire additional resource indication based on the resource configuration information, i.e. acquire the configuration information of the PDSCH, and may dynamically acquire updated resource indication based on a change of a resource control set, so that a manner of indicating a resource is more flexible. Meanwhile, the network side device does not need to transmit the configuration information of the PDSCH in other ways, thus reducing a signaling overhead; and the terminal may perform targeted reception of data based on the acquired configuration information of the PDSCH.

The third correspondence relation described above will be described in detail below by using specific embodiments.

In one possible implementation, the resource configuration information includes an identifier of a control resource set, and the third correspondence relation includes at least one correspondence relation of the following: a correspondence relation between an identifier of a control resource set and a reception bandwidth of the PDSCH; a correspondence relation between an identifier of a control resource set and position information of a PDSCH; and a correspondence relation between an identifier of a control resource set and a size of RBGs used for transmitting the PDSCH.

Those skilled in the art may understand that, since the resource configuration information includes an identifier of a control resource set, when the resource configuration information includes only the identifier of the control resource set, the resource configuration information may be equivalent to the identifier of the control resource set. In such a case, a concept of the resource configuration information may not be introduced, and the network side device may directly transmit the identifier corresponding to each of at least one control resource set to the terminal, or the identifier corresponding to each of at least one control resource set may be agreed through a protocol.

The terminal determines an identifier corresponding to the control resource set, and acquires the configuration information of the PDSCH based on a third correspondence relation between the identifier of the control resource set and the configuration information of the PDSCH.

Different identifiers of control resource sets correspond to different reception bandwidths of the PDSCH, and an identifier of each control resource set corresponds to at least one reception bandwidth of the PDSCH. For example, an identifier 1 of a control resource set may correspond to two different reception bandwidths. When the terminal determines that a control resource set for transmitting DCI is the control resource set 1, the terminal only needs to perform blind detection with respect to two reception bandwidths, thereby reducing the number of times of blind detection and improving the efficiency of blind detection.

Different identifiers of control resource sets correspond to different position information of PDSCH, and an identifier of each control resource set corresponds to at least one piece of position information of the PDSCH. For example, an identifier 1 of a control resource set corresponds to two pieces of position information, and an identifier 2 of a control resource set corresponds to three pieces of position information. When the terminal determines that the control resource set for transmitting DCI is the control resource set 1, the terminal only needs to determine the position of the PDSCH with respect to two pieces of position information.

Different identifiers of control resource sets correspond to different sizes of RBGs, and an identifier of each control resource set corresponds to at least one size of a RBG. For example, an identifier 1 of a control resource set may correspond to two sizes of RBGs, and an identifier 2 of a control resource set may correspond to three sizes of RBGs. When the terminal determines that the control resource set for transmitting DCI is the control resource set 1, the terminal acquires data transmitted on the PDSCH with respect to two sizes of RBGs.

In another possible implementation, the resource configuration information includes an interleaving mode of Resource Element Group (REG) in the control resource set, and the third correspondence relation includes at least one correspondence relation of the following: a correspondence relation between an interleaving mode of REGs and a reception bandwidth of the PDSCH; a correspondence relation between an interleaving mode of REGs and position information of the PDSCH; and a correspondence relation between an interleaving mode of REGs and a size of the RBG used for transmitting the PDSCH.

Those skilled in the art may understand that, since the resource configuration information includes an interleaving mode of REGs in a control resource set, when the resource configuration information includes only the interleaving mode of REGs, the resource configuration information may be equivalent to the interleaving mode of REGs. In such a case, a concept of the resource configuration information may not be introduced, and the network side device may directly transmit the interleaving mode of REGs corresponding to each of at least one control resource set to the terminal, or the interleaving mode of REGs corresponding to each of at least one control resource set may be agreed through a protocol.

The terminal determines the interleaving mode of the REG corresponding to the control resource set, and acquires the configuration information of the PDSCH based on the third correspondence relation between the interleaving mode of REGs in the control resource set and the configuration information of the PDSCH.

As may be seen from FIGS. 5 and 6, the interleaving mode of REG has multiple types, and different interleaving modes correspond to different reception bandwidths of the PDSCH, and each interleaving mode corresponds to at least one reception bandwidth of the PDSCH. Different interleaving modes correspond to different pieces of position information of PDSCH, and each interleaving mode corresponds to at least one piece of position information of the PDSCH; different interleaving modes correspond to different sizes of RBGs, and each interleaving mode corresponds to at least one size of RBG. In a specific implementation process, various interleaving modes may be represented by identifiers of the interleaving modes. Correspondence relations between an interleaving mode and a reception bandwidth of a PDSCH, between an interleaving mode and position information of the PDSCH, and between an interleaving mode and a size of a RBG used for transmitting the PDSCH, are similar to the correspondence relations between an identifier of a control resource set and a reception bandwidth of the PDSCH, between an identifier of a control resource set and position information of the PDSCH, and between an identifier of a control resource set and a size of a RBG used for transmitting the PDSCH. Detailed description thereof may be found from the above embodiments, and will not be repeated herein.

In still another possible implementation, the resource configuration information includes a mapping mode of a Resource Element Group (REG) in a control resource set, and the third correspondence relation includes at least one correspondence relation of the following: a correspondence relation between a mapping mode of a REG and a reception bandwidth of a PDSCH; a correspondence relation between a mapping mode of a REG and position information of the PDSCH; and a correspondence relation between a mapping mode of a REG and a size of the RBG used for transmitting the PDSCH.

Those skilled in the art may understand that, since the resource configuration information includes a mapping mode of a REG in a control resource set, when the resource configuration information includes only the mapping mode of a REG, the resource configuration information may be equivalent to the mapping mode of a REG. In such a case, a concept of the resource configuration information may not be introduced, and the network side device may directly transmit the interleaving mode of a REG corresponding to each of at least one control resource set to the terminal, or the interleaving mode of a REG corresponding to each of at least one control resource set may be agreed through a protocol.

The terminal determines the mapping mode of a REG corresponding to the control resource set, and acquires the configuration information of the PDSCH based on the third correspondence relation between the mapping mode of the REG in the control resource set and the configuration information of the PDSCH.

As may be seen from FIG. 3 and FIG. 4, the mapping mode of a REG has multiple types. Different mapping modes correspond to different reception bandwidths of PDSCH, and each mapping mode corresponds to at least one reception bandwidth of the PDSCH; different mapping modes correspond to different pieces of position information of PDSCH, and each mapping mode corresponds to at least one piece of position information of a PDSCH; and different mapping modes correspond to different sizes of RBGs, and each mapping mode corresponds to at least one size of a RBG. In a specific implementation process, various mapping modes may be represented by identifiers of the mapping modes. Correspondence relations between a mapping mode and a reception bandwidth of the PDSCH, between a mapping mode and position information of the PDSCH, and between a mapping mode and a size of a RBG used for transmitting the PDSCH are similar to correspondence relations between an identifier of a control resource set and a reception bandwidth of the PDSCH, between the identifier of the control resource set and position information of the PDSCH, and between the identifier of the control resource set and the size of the RBG used for transmitting the PDSCH. Detailed description thereof may be found from the above embodiments, and will not be repeated in the present disclosure.

Those skilled in the art may understand that, in the implementation described above, the network side device may directly transmit to the terminal the third correspondence relation between the configuration information of PDSCH and at least one of an identifier, an interleaving mode of REGs, and a mapping mode of a REG corresponding to each of at least one control resource set, or the third correspondence relation between the configuration information of PDSCH and at least one of an identifier, an interleaving mode of REGs, and a mapping mode of a REG corresponding to each of at least one control resource set may be agreed through a protocol.

The terminal determines at least one of the identifier corresponding to the control resource set, the interleaving mode of REGs, and the mapping mode of the REG, and then determines the configuration information of the PDSCH based on the third correspondence relation.

Those skilled in the art may understand that configuration information of the first correspondence relation, configuration information of the second correspondence relation and configuration information of the third correspondence relation transmitted by the network side device in the above embodiments may all be semi-static configuration information. That is, the configuration information transmitted by the network side device to the terminal may last for a period of time, and may be constantly used before the network side device makes an update.

FIG. 10 is a schematic structural diagram of a terminal provided by some embodiments of the present disclosure. As shown in FIG. 10, the terminal 100 includes a processing module 1001, a blind-detection-information acquisition module 1002, and a reception module 1003.

The processing module 1001 is configured to determine resource configuration information corresponding to a control resource set. The blind-detection-information acquisition module 1002 is configured to acquire blind detection information based on a first correspondence relation between the resource configuration information and the blind detection information, wherein the blind detection information includes at least one of: a length of downlink control information (DCI), an aggregation level of candidate control channels, and a length of a Resource Allocation (RA) field in the DCI. The reception module 1003 is configured to receive, based on the blind detection information, DCI transmitted by the network side device on the control resource set.

Optionally, the reception module 1003 is further configured to receive configuration information of a first correspondence relation transmitted by the network side device, wherein the configuration information of the first correspondence relation includes the first correspondence relation.

In the terminal shown in FIG. 10, specific implementations of the first correspondence relation may be obtained from the above embodiments, and will not be repeated herein.

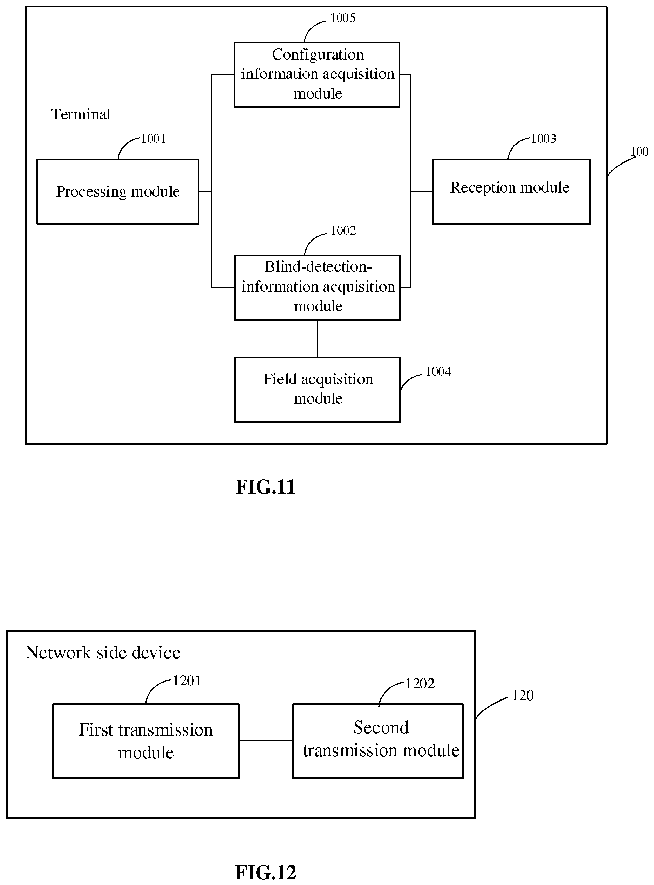

FIG. 11 is a schematic structural diagram of a terminal provided by some embodiments of the present disclosure. On a basis of FIG. 10, when the blind detection information includes a length of DCI and the DCI includes a Resource Allocation (RA) field, the terminal shown in FIG. 11 further includes a field acquisition module 1004 and a configuration information acquisition module 1005.

The field acquisition module 1004 is configured to acquire a length of the RA based on a second correspondence relation between a length of the DCI and a length of the RA. The reception module 1003 is further configured to receive, based on the length of the DCI and the length of the RA, the DCI transmitted by the network side device on the control resource set.

Optionally, the reception module 1003 is further configured to: receive configuration information of a second correspondence relation transmitted by the network side device, wherein the configuration information of the second correspondence relation includes the second correspondence relation.

Optionally, the configuration information acquisition module 1005 is configured to determine, based on a third correspondence relation between the resource configuration information and configuration information of a PDSCH, the configuration information of the PDSCH for transmitting data, wherein the configuration information of the PDSCH includes at least one of a reception bandwidth of the PDSCH, position information of the PDSCH, and a size of a RBG for transmitting the PDSCH; the position information of the PDSCH includes a start symbol position and/or an end symbol position of the PDSCH. The reception module 1003 is further configured to receive, based on the configuration information of the PDSCH and the DCI, data transmitted on the PDSCH.

Optionally, the reception module 1003 is further configured to receive configuration information of a third correspondence relation transmitted by the network side device, wherein the configuration information of the third correspondence relation includes the third correspondence relation.

In the terminal shown in FIG. 11, various specific implementations of the third correspondence relation may be obtained from the above embodiments, and will not be repeated herein.

Optionally, the reception module 1003 is further configured to receive resource configuration information corresponding to each of at least one control resource set transmitted by the network side device. The processing module 1001 is specifically configured to monitor the at least one control resource set based on the resource configuration information corresponding to each of the at least one control resource set so as to determine a control resource set for transmitting the DCI; and determine, based on the control resource set for transmitting the DCI, resource configuration information corresponding to the control resource set.

The terminal provided in FIG. 11 may be used to perform an embodiment of the method described above, and implementation principles and technical effects of the terminal in FIG. 11 are similar to those in the embodiment of the method described above.

FIG. 12 is a schematic structural diagram of a network side device provided by some embodiments of the present disclosure. As shown in FIG. 12, the network side device 120 includes a first transmission module 1201 and a second transmission module 1202. The first transmission module 1201 is configured to transmit configuration information of a first correspondence relation to a terminal, wherein the configuration information of the first correspondence relation includes a first correspondence relation between blind detection information and resource configuration information of a resource control set for transmitting downlink control information (DCI), wherein the blind detection information includes at least one of a length of downlink control information (DCI), an aggregation level of candidate control channels and a length of Resource Allocation (RA) field in the DCI. The second transmission module 1202 is configured to transmit DCI to the terminal on the control resource set.

In the network side device shown in FIG. 12, various specific implementations of the first correspondence relation may be obtained from the above embodiments, and will not be repeated herein.

Optionally, the blind detection information includes a length of DCI, wherein the DCI includes a Resource Allocation (RA) field. The first transmission module 1201 is further configured to transmit configuration information of a second correspondence relation to the terminal, wherein the configuration information of the second correspondence relation includes the second correspondence relation between a length of the DCI and a length of the RA.

Optionally, the first transmission module 1201 is further configured to transmit configuration information of a third correspondence relation to the terminal, wherein the configuration information of the third correspondence relation includes a correspondence relation between the resource configuration information and configuration information of a PDSCH. The configuration information of the PDSCH includes at least one of: a reception bandwidth of the PDSCH, position information of the PDSCH, a size of a RBG for transmitting the PDSCH, and the position information of the PDSCH includes a start symbol position and/or an end symbol position of the PDSCH.

In the network side device shown in FIG. 12, various specific implementations of the third correspondence relation may be obtained from the above embodiments, and will not be repeated herein.

Optionally, the first transmission module 1201 is further configured to transmit resource configuration information corresponding to each of at least one control resource set to the terminal.

The network side device provided in FIG. 12 may be used to perform the above-described method embodiments, and implementation principles and technical effect of the network side device in FIG. 12 are similar to those in the above method embodiments, and will not be repeated again herein.

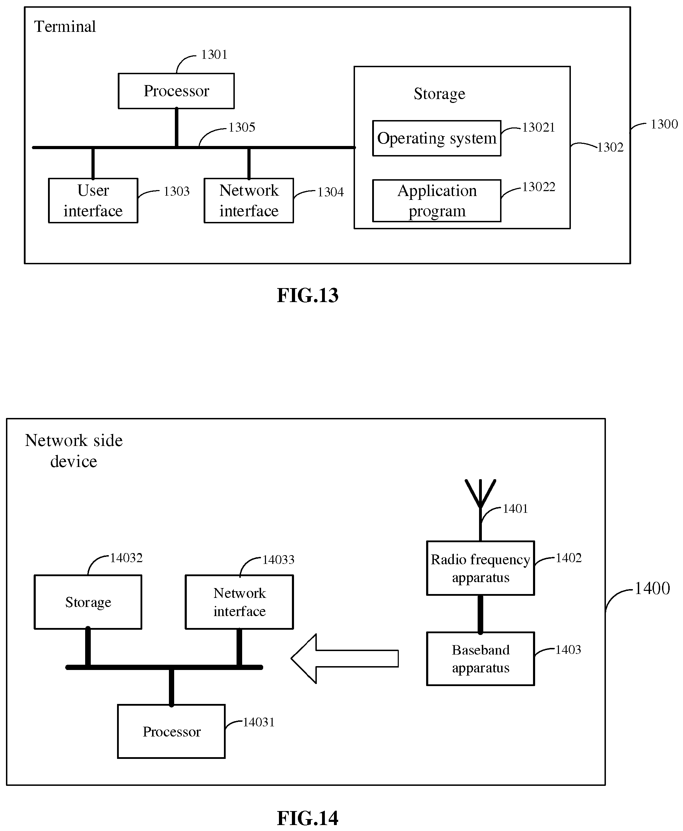

FIG. 13 is a schematic structural diagram of a terminal provided by some embodiments of the present disclosure. As shown in FIG. 13, the terminal 1300 shown in FIG. 13 includes at least one processor 1301, a storage 1302, at least one network interface 1304, and a user interface 1303. Various components in the terminal 1300 are coupled together by a bus system 1305. It will be appreciated that the bus system 1305 is used to enable connection communication among these components. The bus system 1305 includes a data bus, a power bus, a control bus, and a status signal bus. However, for clarity of illustration, various buses are designated as the bus system 1305 in FIG. 13.

The user interface 1303 may include a display, a keyboard, or a pointing device (e.g., a mouse, a trackball, a touch pad, or a touch screen, etc.).

It may be understood that the storage 1302 in some embodiments of the present disclosure may be a volatile storage or a non-volatile storage, or may include both volatile and non-volatile storages. The non-volatile storage may be a Read-Only Memory (ROM), a Programmable ROM (PROM), an Erasable PROM (EPROM), an Electrically EPROM (EEPROM), or a flash memory. The volatile storage may be a Random Access Memory (RAM), which serves as an external cache. By way of example but not limitation, many forms of RAM may be used, such as a Static RAM (SRAM), a Dynamic RAM (DRAM), a Synchronous DRAM (SDRAM), a Double Data Rate SDRAM (DDRSDRAM)), an Enhanced SDRAM (ESDRAM), a Synchronous link DRAM (SLDRAM) and Direct Rambus RAM (DRRAM). The storage 1302 in the systems and methods described by some embodiments of the present disclosure is intended to include, but is not limited to, these and any other suitable types of storages.

In some embodiments, storage 1302 stores elements, executable modules or data structures, or a subset, or an extended set of the following: an operating system 13021 and an application program 13022.

The operating system 13021 includes various system programs, such as a framework layer, a core library layer, and a driver layer, for implementing various basic services and processing hardware-based tasks. The application program 13022 includes various application programs such as a Media Player, a Browser, and the like, for implementing various application services. Programs for implementing the methods in some embodiments of the present disclosure may be included in the application program 13022.

The method disclosed by some embodiments of the present disclosure described above may be applied to, or implemented by, the processor 1301. The processor 1301 may be an integrated circuit chip with a signal processing capability. In implementation, steps in the method described above may be accomplished by integrated logic circuitry of hardware in the processor 1301 or instructions in a form of software. The processor 1301 described above may be a general purpose processor, a Digital Signal Processor (DSP), an Application Specific Integrated Circuit (ASIC), a Field Programmable Gate Array (FPGA) or other programmable logic devices, discrete gates or transistor logic devices, discrete hardware components. The disclosed methods, steps, and logic blocks in some embodiments of the present disclosure may be implemented or performed. The general purpose processor may be a microprocessor or the processor may be any conventional processor or the like. The steps in the method disclosed in connection with some embodiments of the present disclosure may be implemented directly by a hardware decoding processor, or by a combination of hardware and software modules in a decoding processor. A software module may be located in a storage medium known in the art such as a random access memory, a flash memory, a read only memory, a programmable read only memory, or an electrically erasable programmable memory, registers, etc. The storage medium is located in the storage 1302 and the processor 1301 reads information in the storage 1302 and performs steps of the method described above in conjunction with hardware of the processor.

It may be appreciated that the embodiments described in some embodiments of the present disclosure may be implemented in hardware, software, firmware, middleware, microcode, or a combination thereof. For a hardware implementation, the processing unit may be implemented in one or more Application Specific Integrated Circuits (ASICs), a Digital Signal Processing (DSP), a Digital Signal Processing Device (DSPD device or DSPD), a Programmable Logic Device (PLD), a Field Programmable Gate Array (FPGA), a general purpose processor, a controller, a microcontroller, a microprocessor, other electronic units for performing functions described in the present disclosure, or a combination thereof.

For a software implementation, techniques described in some embodiments of the present disclosure may be implemented by modules (e.g., processes, functions, etc.) that perform the functions described in some embodiments of the present disclosure. A software code may be stored in the storage and executed by a processor. The storage may be implemented inside the processor or external to the processor.

Specifically, the processor 1301 may call a program or an instruction stored in the storage 1302 to specifically perform: determining resource configuration information corresponding to a control resource set; acquiring blind detection information based on a first correspondence relation between the resource configuration information and the blind detection information, wherein the blind detection information includes at least one of: a length of downlink control information (DCI), an aggregation level of candidate control channels, and a length of a Resource Allocation (RA) field in the DCI; based on the blind detection information, control the network interface 1304 to receive DCI transmitted by the network side device on the control resource set.

Optionally, the processor 1301 is further configured to control the network interface 1304 to receive configuration information of a first correspondence relation transmitted by the network side device, wherein the configuration information of the first correspondence relation includes the first correspondence relation.

In the terminal shown in FIG. 13, various specific implementations of the first correspondence relation may be obtained by referring to the above embodiments, and will not be repeated herein.

Optionally, when the blind detection information includes a length of DCI and the DCI includes a Resource Allocation (RA) field, The processor 1301 is further configured to acquire a length of the RA based on a second correspondence relation between a length of the DCI and a length of the RA; receive, based on the length of the DCI and the length of the RA, the DCI transmitted by the network side device on the control resource set.

The processor 1301 is further configured to control the network interface 1304 to receive configuration information of a second correspondence relation transmitted by the network side device, wherein the configuration information of the second correspondence relation includes the second correspondence relation.

The processor 1301 is further configured to determine, based on a third correspondence relation between the resource configuration information and configuration information of a PDSCH, the configuration information of the PDSCH for transmitting data, wherein the configuration information of the PDSCH includes at least one of a reception bandwidth of the PDSCH, position information of the PDSCH, and a size of a RBG for transmitting the PDSCH; the position information of the PDSCH includes a start symbol position and/or an end symbol position of the PDSCH.

The processor 1301 is further configured to control, based on the configuration information of the PDSCH and the DCI, the network interface 1304 to receive data transmitted on the PDSCH.

The processor 1301 is further configured to control the network interface 1304 to receive data transmitted on the PDSCH according to the configuration information of the PDSCH and the DCI.

The processor 1301 is further configured to control the network interface 1304 to receive configuration information of a third correspondence relation transmitted by the network side device, wherein the configuration information of the third correspondence relation includes the third correspondence relation.

In the terminal shown in FIG. 13, various specific implementations of the third correspondence relation may be obtained from the above embodiments, and will not be repeated herein.

The processor 1301 is further configured to control the network interface 1304 to receive resource configuration information corresponding to each of at least one control resource set transmitted by the network side device.

The processor 1301 is further configured to monitor the at least one control resource set based on the resource configuration information corresponding to each of the at least one control resource set so as to determine a control resource set for transmitting the DCI; and determine, based on the control resource set for transmitting the DCI, resource configuration information corresponding to the control resource set.

The terminal shown in FIG. 13 acquires, based on a first correspondence relation between resource configuration information and blind detection information, at least one of a length of blind downlink control information (DCI), an aggregation level of candidate control channels, and a length of a Resource Allocation (RA) field in the DCI through determining resource configuration information corresponding to the control resource set. That is, the terminal may acquire additional resource indication based on the first correspondence relation, without needing the network side device to transmit the blind detection information, and may dynamically acquire an updated resource indication based on a change of the resource control set, so that a resource indication manner is more flexible, and the terminal may perform targeted blind detection based on the acquired at least one of the length of the DCI, the aggregation level of the candidate control channels, and the length of the Resource Allocation (RA) field in the DCI. The efficiency of blind detection is improved.

FIG. 14 is a schematic structural diagram of a network side device provided by some embodiments of the present disclosure. As shown in FIG. 14, the network side device 1400 includes an antenna 1401, a radio frequency apparatus 1402, and a baseband apparatus 1403. The antenna 1401 is connected to a radio frequency apparatus 1402. In an uplink direction, the radio frequency apparatus 1402 receives information through the antenna 1401, and transmits the received information to the baseband apparatus 1403 for processing. In a downlink direction, the baseband apparatus 1403 processes information to be transmitted and transmits the processed information to the radio frequency apparatus 1402, and the radio frequency apparatus 1402 processes the received information and transmits the processed received information via the antenna 1401.

A frequency-band processing apparatus described above may be located in the baseband apparatus 1403, and the method performed by the network side apparatus in the above embodiments may be implemented in the baseband apparatus 1403. The baseband apparatus 1403 includes a processor 14031 and a storage 14032.

The baseband apparatus 1403 may, for example, include at least one baseband board provided with a plurality of chips, as shown in FIG. 12. One of the plurality of chips is, for example, a processor 14031, is connected to the storage 14032, so as to call a program in the storage 14032 to perform an operation of a network side device shown in the above method embodiment.

The baseband apparatus 1403 may further include a network interface 14033 for interacting information with the radio frequency apparatus 1402. This interface is, for example, a common public radio interface (CPRI, for short).

The processor herein may be a processor, or may be a general name of a plurality of processing elements, for example, the processor may be a CPU, or may be an ASIC, or may be one or more integrated circuits, such as one or more microprocessor DSP, or one or more Field Programmable Gate Arrays (FPGAs), configured to implement the methods performed by the above network side device. The storage element may be one storage or may represent a plurality of storage elements.

The storage 14032 may be a volatile storage or a non-volatile storage, or may include both volatile and non-volatile storages. The non-volatile storage may be a Read-Only Memory (ROM), a Programmable ROM (PROM), an Erasable PROM (EPROM), an Electrically EPROM (EEPROM), or a flash memory. The volatile storage may be a Random Access Memory (RAM), which serves as an external cache. By way of example but not limitation, many forms of RAM may be used, such as a Static RAM (SRAM), a Dynamic RAM (DRAM), a Synchronous DRAM (SDRAM), a Double Data Rate SDRAM (DDRSDRAM)), an Enhanced SDRAM (ESDRAM), a Synchronous link DRAM (SLDRAM) and a Direct Rambus RAM (DRRAM). The storage 1302 in the present disclosure is intended to include, but is not limited to, these and any other suitable types of storages.

Specifically, the processor 14031 calls a program in the storage 14032 to control the radio frequency apparatus 1402 to: transmit configuration information of a first correspondence relation to a terminal, wherein the configuration information of the first correspondence relation includes a first correspondence relation between blind detection information and resource configuration information of a resource control set for transmitting downlink control information (DCI), wherein the blind detection information includes at least one of a length of downlink control information (DCI), an aggregation level of candidate control channels and a length of Resource Allocation (RA) field in the DCI; and transmit DCI to the terminal on the control resource set.

In the network side device shown in FIG. 14, various specific implementations of the first correspondence relation may be obtained from the above embodiments, and will not be repeated herein.

Optionally, the blind detection information includes a length of DCI, wherein the DCI includes a Resource Allocation (RA) field. The processor 14031 is further configured to control the radio frequency apparatus 1402 to transmit configuration information of a second correspondence relation to the terminal, wherein the configuration information of the second correspondence relation includes the second correspondence relation between a length of the DCI and a length of the RA.

Optionally, the processor 14031 is further configured to control the radio frequency apparatus 1402 to: transmit configuration information of a third correspondence relation to the terminal, wherein the configuration information of the third correspondence relation includes a correspondence relation between the resource configuration information and configuration information of a PDSCH. The configuration information of the PDSCH includes at least one of: a reception bandwidth of the PDSCH, position information of the PDSCH, a size of a RBG for transmitting the PDSCH, and the position information of the PDSCH includes a start symbol position and/or an end symbol position of the PDSCH.

In the network side device shown in FIG. 14, various specific implementations of the third correspondence relation may be obtained from the above embodiments, and will not be repeated herein.

Optionally, the processor 14031 is further configured to control the radio frequency apparatus 1402 to: transmit resource configuration information corresponding to each of at least one control resource set to the terminal.

The network side device transmits configuration information of a first correspondence relation to a terminal, wherein the configuration information of the first correspondence relation includes a first correspondence relation between blind detection information and resource configuration information of a resource control set for transmitting downlink control information (DCI), wherein the blind detection information includes at least one of a length of downlink control information (DCI), an aggregation level of candidate control channels and a length of Resource Allocation (RA) field in the DCI; and the network side device transmits DCI to the terminal on the control resource set. That is, the network side device performs a targeted indication to a blind detection range of the terminal, the number of times of terminal blind detection is reduced, and the efficiency of blind detection is improved.

Those of ordinary skills in the art will appreciate that elements and algorithm steps in examples described in connection with embodiments disclosed in some embodiments of the present disclosure may be implemented in electronic hardware, or a combination of computer software and electronic hardware. Whether these functions are performed in a form of hardware or software depends on a specific application and a design constraint of a technical solution. Those skilled in the art may use different methods to implement the described functionality for each particular application, but such implementation should not be considered to go beyond the scope of the present disclosure.

Those skilled in the art may clearly understand that, for convenience and brevity of description, specific working processes of the systems, devices and units described above may be obtained by referring to a corresponding process in the method embodiments described above, and will not be described again herein.

In the embodiments provided by the present disclosure, it should be understood that the disclosed apparatus and methods may be implemented in other ways. For example, the apparatus embodiments described above are merely illustrative. For example, a division of units is only a logical function division, and another division of the unit may be implemented in a practical application. For example, multiple units or components may be combined or integrated into another system, or some features may be ignored, or not performed. Optionally, a coupling or a direct coupling or communication connection between elements shown or discussed may be an indirect coupling or a communication connection through some interfaces, devices or units, or may be in an electrical, mechanical or other form.

Elements described as separate elements may or may not be physically separate, elements shown as elements may or may not be physical elements, i.e. may be located in one place, or may also be distributed over a plurality of network elements. Some or all of the units may be selected according to actual needs to achieve a purpose of a technical solution of the present embodiment.

In addition, each functional unit in each embodiment of that present invention may be integrated in one processing unit, may be physically separated, or two or more of the units may be integrated in one unit.

The functions, if implemented in a form of software functional units and sold or used as separate products, may be stored in a computer readable storage medium. Based on this understanding, an essence of the technical solution of the present disclosure, or a part of the technical solution of the present disclosure contributing to the related art, or a part of the technical solution may be embodied in a form of a software product stored in a storage medium. The computer software product is stored in a storage medium, and includes a number of instructions used to cause a computer device (which may be a personal computer, a server, or a network device, etc.) to perform all or parts of the steps of the method described in various embodiments of the present disclosure. The aforementioned storage medium includes various medium capable of storing program codes, such as a USB disk, a removable hard disk, a ROM, a RAM, a magnetic disk, or a compact disc.

## Claims

1. A method of transmitting downlink control information, comprising:
determining (S701, S901), by a terminal, resource configuration information corresponding to a control resource set;
acquiring (S702), by the terminal, blind detection information based on a first correspondence relation between the resource configuration information and the blind detection information, wherein the blind detection information comprises an aggregation level of candidate control channels; and
receiving (S703), by the terminal based on the blind detection information, Downlink Control Information DCI transmitted by the network side device on the control resource set,
wherein the resource configuration information comprises an identifier of the control resource set, and the first correspondence relation comprises
a correspondence relation between an identifier of a control resource set and the aggregation level of candidate control channels,
wherein the identifier of the control resource set is used to indicate a time-domain position and/or a frequency-domain position of the control resource set.

2. The method according to claim 1, wherein before acquiring (S702), by the terminal, the blind detection information based on the first correspondence relation between the resource configuration information and the blind detection information, the method further comprises:
receiving, by the terminal, first correspondence relation configuration information transmitted by the network side device, wherein the first correspondence relation configuration information comprises the first correspondence relation.

3. The method according to claim 1, wherein one or both of the following conditions (i) and (ii) applies:
(i) the resource configuration information comprises an interleaving mode of a Resource Element Group REG in the control resource set, and the first correspondence relation comprises a correspondence relation between the interleaving mode of the REG and the aggregation level of candidate control channels;
(ii) the resource configuration information comprises a mapping mode of a Resource Element Group REG in the control resource set, and the first correspondence relation comprises a correspondence relation between a mapping mode of the REG and the aggregation level of candidate control channels.

4. The method according to claim 1, wherein the blind detection information further comprises a length of DCI, wherein the DCI comprises a Resource Allocation RA field, and the blind detection information further comprises a length of the RA field;
after acquiring (S702), by the terminal, the blind detection information based on the first correspondence relation between the resource configuration information and the blind detection information, the method further comprises:
acquiring, by the terminal, the length of the RA field based on a second correspondence relation between the length of the DCI and the length of the RA field;
receiving (S703), by the terminal based on the blind detection information, DCI transmitted by the network side device on the control resource set comprises:
receiving, by the terminal based on the length of the DCI and the length of the RA field, the DCI transmitted by the network side device on the control resource set.

5. The method according to any one of claims 1 to 4, wherein,
after determining (S701, S901), by the terminal, resource configuration information corresponding to the control resource set, the method further comprises:
determining (S902), by the terminal based on a third correspondence relation between the resource configuration information and configuration information of a Physical Downlink Share Channel PDSCH, configuration information of the PDSCH for transmitting data, wherein the configuration information of the PDSCH comprises at least one of a reception bandwidth of the PDSCH, position information of the PDSCH, a size of a Resource Block Group RBG for transmitting the PDSCH; the position information of the PDSCH comprises a start symbol position and/or an end symbol position of the PDSCH;
after receiving (S703), by the terminal based on the blind detection information, DCI transmitted by the network side device on the control resource set, the method further comprises:
receiving (S903), by the terminal based on the configuration information of the PDSCH and the DCI, data transmitted on the PDSCH.

6. A method of transmitting downlink control information, comprising:
transmitting (S801), by a network side device, first correspondence relation configuration information to a terminal, wherein the first correspondence relation configuration information comprises a first correspondence relation between blind detection information and resource configuration information of a resource control set for transmitting downlink control information DCI, the blind detection information comprises an aggregation level of candidate control channels; and
transmitting (S802), by the network side device, the DCI to the terminal on the control resource set,
wherein, the resource configuration information comprises an identifier of the control resource set, and the first correspondence relation comprises a correspondence relation between an identifier of a control resource set and the aggregation level of candidate control channels,
wherein the identifier of the control resource set is used to indicate a time-domain position and/or a frequency-domain position of the control resource set.

7. The method according to claim 6, wherein one or both of the following conditions (i) and (ii) applies:
(i) the resource configuration information comprises an interleaving mode of a Resource Element Group REG in the control resource set, and the first correspondence relation comprises a correspondence relation between the interleaving mode of the REG and the aggregation level of candidate control channels;
(ii) the resource configuration information comprises a mapping mode of a Resource Element Group REG in the control resource set, the first correspondence relation comprises a correspondence relation between a mapping mode of the REG and the aggregation level of candidate control channels.

8. A terminal, comprising:
a processing module (1001), configured to determine resource configuration information corresponding to a control resource set;
a blind-detection-information acquisition module (1002), configured to acquire blind detection information based on a first correspondence relation between the resource configuration information and the blind detection information, wherein the blind detection information comprises an aggregation level of candidate control channels; and
a reception module (1003), configured to receive, based on the blind detection information, Downlink Control Information DCI transmitted by the network side device on the control resource set,
wherein the resource configuration information comprises an identifier of the control resource set, the first correspondence relation comprises a correspondence relation between an identifier of a control resource set and the aggregation level of candidate control channels,
wherein the identifier of the control resource set is used to indicate a time-domain position and/or a frequency-domain position of the control resource set.

9. The terminal according to claim 8, wherein the reception module (1003) is further configured to receive first correspondence relation configuration information transmitted by the network side device, wherein the first correspondence relation configuration information comprises the first correspondence relation.

10. The terminal according to claim 8, wherein one or both of the following conditions (i) and (ii) applies:
(i) the resource configuration information comprises an interleaving mode of a Resource Element Group REG in the control resource set, the first correspondence relation comprises a correspondence relation between the interleaving mode of the REG and the aggregation level of candidate control channels;
(ii) the resource configuration information comprises a mapping mode of a Resource Element Group REG in the control resource set, and the first correspondence relation comprises a correspondence relation between a mapping mode of the REG and the aggregation level of candidate control channels.

11. The terminal according to claim 8, wherein the blind detection information further comprises a length of DCI, wherein the DCI comprises a Resource Allocation RA field, and the blind detection information further comprises a length of the RA field;
the terminal further comprises a field acquisition module (1004), configured to acquire the length of the RA field based on a second correspondence relation between the length of the DCI and the length of the RA field; and
the reception module (1003) is further configured to: receive, based on the length of the DCI and the length of the RA field, the DCI transmitted by the network side device on the control resource set.

12. The terminal according to any one of claims 8 to 11, further comprising:
a configuration information acquisition module (1005), configured to determine, based on a third correspondence relation between the resource configuration information and configuration information of a Physical Downlink Share Channel PDSCH, configuration information of the PDSCH for transmitting data, wherein the configuration information of the PDSCH comprises at least one of a reception bandwidth of the PDSCH, position information of the PDSCH, a size of a Resource Block Group RBG for transmitting the PDSCH, the position information of the PDSCH comprises a start symbol position and/or an end symbol position of the PDSCH;
the reception module (1003) is further configured to: receive, based on the configuration information of the PDSCH and the DCI, data transmitted on the PDSCH.

13. A network side device, comprising:
a first transmission module (1201), configured to transmit first correspondence relation configuration information to a terminal, wherein the first correspondence relation configuration information comprises a first correspondence relation between blind detection information and resource configuration information of a resource control set for transmitting downlink control information DCI, the blind detection information comprises an aggregation level of candidate control channels; and
a second transmission module (1202), configured to transmit the DCI to the terminal on the control resource set,
wherein the resource configuration information comprises an identifier of the control resource set, and the first correspondence relation comprises a correspondence relation between an identifier of a control resource set and the aggregation level of candidate control channels,
wherein the identifier of the control resource set is used to indicate a time-domain position and/or a frequency-domain position of the control resource set.

14. The network side device according to claim 13, wherein one or both of the following conditions (i) and (ii) applies:
(i) the resource configuration information comprises an interleaving mode of a Resource Element Group REG in the control resource set, the first correspondence relation comprises a correspondence relation between the interleaving mode of the REG and the aggregation level of candidate control channels;
(ii) the resource configuration information comprises a mapping mode of a Resource Element Group REG in the control resource set, the first correspondence relation comprises: a correspondence relation between a mapping mode of the REG and the aggregation level of candidate control channels.

15. The network side device according to claim 13, wherein the blind detection information further comprises a length of DCI, wherein the DCI comprises a Resource Allocation RA field, and the blind detection information further comprises a length of the RA field;
the first transmission module (1201) is further configured to: transmit second correspondence relation configuration information to the terminal, wherein the second correspondence relation configuration information comprises a second correspondence relation between the length of DCI and the length of RA field.

## Patentansprüche

1. Verfahren zur Übertragung von Downlink-Steuerinformationen, umfassend:
Bestimmen (S701, S901), durch ein Endgerät, von Ressourcenkonfigurationsinformationen, die einem Steuerressourcensatz entsprechen;
Erfassen (S702), durch das Endgerät, von Blinddetektionsinformationen auf Grundlage einer ersten Entsprechungsbeziehung zwischen den Ressourcenkonfigurationsinformationen und den Blinddetektionsinformationen, wobei die Blinddetektionsinformationen eine Aggregationsebene von Kandidatensteuerkanälen umfassen; und
Empfangen (S703), durch das Endgerät auf Grundlage der Blinddetektionsinformationen, von Downlink-Steuerinformationen, DCI, die durch die netzwerkseitige Vorrichtung auf dem Steuerressourcensatz übertragen werden,
wobei die Ressourcenkonfigurationsinformationen eine Kennung des Steuerressourcensatzes umfassen und die erste Entsprechungsbeziehung eine Entsprechungsbeziehung zwischen einer Kennung eines Steuerressourcensatzes und der Aggregationsebene von Kandidatensteuerkanälen umfasst,
wobei die Kennung des Steuerressourcensatzes verwendet wird, um eine Zeitdomänenposition und/oder eine Frequenzdomänenposition des Steuerressourcensatzes anzugeben.

2. Verfahren nach Anspruch 1, wobei das Verfahren vor dem Erfassen (S702), durch das Endgerät, von Blinddetektionsinformationen auf Grundlage der ersten Entsprechungsbeziehung zwischen den Ressourcenkonfigurationsinformationen und den Blinddetektionsinformationen ferner Folgendes umfasst: Empfangen, durch das Endgerät, von ersten Entsprechungsbeziehungskonfigurationsinformationen, die durch die netzwerkseitige Vorrichtung übertragen werden, wobei die ersten Entsprechungsbeziehungskonfigurationsinformationen die erste Entsprechungsbeziehung umfassen.

3. Verfahren nach Anspruch 1, wobei eine oder beide der folgenden Bedingungen (i) und (ii) zutreffen:
(i) die Ressourcenkonfigurationsinformationen einen Verschachtelungsmodus einer Ressourcenelementgruppe, REG, in dem Steuerressourcensatz umfassen und die erste Entsprechungsbeziehung eine Entsprechungsbeziehung zwischen dem Verschachtelungsmodus der REG und der Aggregationsebene von Kandidatensteuerkanälen umfasst;
(ii) die Ressourcenkonfigurationsinformationen einen Zuordnungsmodus einer Ressourcenelementgruppe, REG, in dem Steuerressourcensatz umfassen und die erste Entsprechungsbeziehung eine Entsprechungsbeziehung zwischen einem Zuordnungsmodus der REG und der Aggregationsebene von Kandidatensteuerkanälen umfasst.

4. Verfahren nach Anspruch 1, wobei die Blinddetektionsinformationen ferner eine Länge von DCI umfassen, wobei die DCI ein Ressourcenzuweisungs-, RA-, Feld umfassen und die Blinddetektionsinformationen ferner eine Länge des RA-Felds umfassen; nach dem Erfassen (S702), durch das Endgerät, der Blinddetektionsinformationen auf Grundlage der ersten Entsprechungsbeziehung zwischen den Ressourcenkonfigurationsinformationen und den Blinddetektionsinformationen umfasst das Verfahren ferner:
Erfassen, durch das Endgerät, der Länge des RA-Felds auf Grundlage einer zweiten Entsprechungsbeziehung zwischen der Länge der DCI und der Länge des RA-Felds;
Empfangen (S703), durch das Endgerät auf Grundlage der Blinddetektionsinformationen, von DCI, die durch die netzwerkseitige Vorrichtung auf dem Steuerressourcensatz übertragen werden, umfasst:
Empfangen, durch das Endgerät auf Grundlage der Länge der DCI und der Länge des RA-Feldes, der DCI, die durch die netzwerkseitige Vorrichtung auf dem Steuerressourcensatz übertragen werden.

5. Verfahren nach einem der Ansprüche 1 bis 4, wobei nach dem Bestimmen (S701, S901), durch das Endgerät, von Ressourcenkonfigurationsinformationen, die dem Steuerressourcensatz entsprechen, umfasst das Verfahren ferner:
Bestimmen (S902), durch das Endgerät auf Grundlage einer dritten Entsprechungsbeziehung zwischen den Ressourcenkonfigurationsinformationen und Konfigurationsinformationen eines physikalischen gemeinsamen Downlink-Kanals, PDSCH, von Konfigurationsinformationen des PDSCH zur Übertragung von Daten, wobei die Konfigurationsinformationen des PDSCH mindestens eines von einer Empfangsbandbreite des PDSCH, Positionsinformationen des PDSCH, einer Größe einer Ressourcenblockgruppe, RBG, zur Übertragung des PDSCH umfassen; wobei die Positionsinformationen des PDSCH eine Startsymbolposition und/oder eine Endsymbolposition des PDSCH umfassen;
nach dem Empfangen (S703), durch das Endgerät auf Grundlage der Blinddetektionsinformationen, von DCI, die durch die netzwerkseitige Vorrichtung auf dem Steuerressourcensatz übertragen werden, umfasst das Verfahren ferner:
Empfangen (S903), durch das Endgerät auf Grundlage der Konfigurationsinformationen des PDSCH und der DCI, von Daten, die auf dem PDSCH übertragen werden.

6. Verfahren zur Übertragung von Downlink-Steuerinformationen, umfassend:
Übertragen (S801), durch eine netzwerkseitige Vorrichtung, von ersten Entsprechungsbeziehungskonfigurationsinformationen an ein Endgerät, wobei die ersten Entsprechungsbeziehungskonfigurationsinformationen eine erste Entsprechungsbeziehung zwischen Blinddetektionsinformationen und Ressourcenkonfigurationsinformationen eines Ressourcensteuersatzes zur Übertragung von Downlink-Steuerinformationen, DCI, umfassen, wobei die Blinddetektionsinformationen eine Aggregationsebene von Kandidatensteuerkanälen umfassen; und
Übertragen (S802), durch die netzwerkseitige Vorrichtung, der DCI an das Endgerät auf dem Steuerressourcensatz,
wobei die Ressourcenkonfigurationsinformationen eine Kennung des Steuerressourcensatzes umfassen und die erste Entsprechungsbeziehung eine Entsprechungsbeziehung zwischen einer Kennung eines Steuerressourcensatzes und der Aggregationsebene von Kandidatensteuerkanälen umfasst,
wobei die Kennung des Steuerressourcensatzes verwendet wird, um eine Zeitdomänenposition und/oder eine Frequenzdomänenposition des Steuerressourcensatzes anzugeben.

7. Verfahren nach Anspruch 6, wobei eine oder beide der folgenden Bedingungen (i) und (ii) zutreffen:
(i) die Ressourcenkonfigurationsinformationen einen Verschachtelungsmodus einer Ressourcenelementgruppe, REG, in dem Steuerressourcensatz umfassen und die erste Entsprechungsbeziehung eine Entsprechungsbeziehung zwischen dem Verschachtelungsmodus der REG und der Aggregationsebene von Kandidatensteuerkanälen umfasst;
(ii) die Ressourcenkonfigurationsinformationen einen Zuordnungsmodus einer Ressourcenelementgruppe, REG, in dem Steuerressourcensatz umfassen, die erste Entsprechungsbeziehung eine Entsprechungsbeziehung zwischen einem Zuordnungsmodus der REG und der Aggregationsebene von Kandidatensteuerkanälen umfasst.

8. Endgerät, umfassend:
ein Verarbeitungsmodul (1001), das dazu konfiguriert ist, Ressourcenkonfigurationsinformationen zu bestimmen, die einem Steuerressourcensatz entsprechen; ein Blinddetektionsinformationenerfassungsmodul (1002), das dazu konfiguriert ist, Blinddetektionsinformationen auf Grundlage einer ersten Entsprechungsbeziehung zwischen den Ressourcenkonfigurationsinformationen und den Blinddetektionsinformationen zu erfassen, wobei die Blinddetektionsinformationen eine Aggregationsebene von Kandidatensteuerkanälen umfassen; und
ein Empfangsmodul (1003), das dazu konfiguriert ist, auf Grundlage der Blinddetektionsinformationen, Downlink-Steuerinformationen, DCI, zu empfangen, die durch die netzwerkseitige Vorrichtung auf dem Steuerressourcensatz übertragen werden,
wobei die Ressourcenkonfigurationsinformationen eine Kennung des Steuerressourcensatzes umfassen, die erste Entsprechungsbeziehung eine Entsprechungsbeziehung zwischen einer Kennung eines Steuerressourcensatzes und der Aggregationsebene von Kandidatensteuerkanälen umfasst,
wobei die Kennung des Steuerressourcensatzes verwendet wird, um eine Zeitdomänenposition und/oder eine Frequenzdomänenposition des Steuerressourcensatzes anzugeben.

9. Endgerät nach Anspruch 8, wobei das Empfangsmodul (1003) ferner dazu konfiguriert ist, erste Entsprechungsbeziehungskonfigurationsinformationen zu empfangen, die durch die netzwerkseitige Vorrichtung übertragen werden, wobei die ersten Entsprechungsbeziehungskonfigurationsinformationen die erste Entsprechungsbeziehung umfassen.

10. Endgerät nach Anspruch 8, wobei eine oder beide der folgenden Bedingungen (i) und (ii) zutreffen:
(i) die Ressourcenkonfigurationsinformationen einen Verschachtelungsmodus einer Ressourcenelementgruppe, REG, in dem Steuerressourcensatz umfassen, die erste Entsprechungsbeziehung eine Entsprechungsbeziehung zwischen dem Verschachtelungsmodus der REG und der Aggregationsebene von Kandidatensteuerkanälen umfasst;
(ii) die Ressourcenkonfigurationsinformationen einen Zuordnungsmodus einer Ressourcenelementgruppe, REG, in dem Steuerressourcensatz umfassen und die erste Entsprechungsbeziehung eine Entsprechungsbeziehung zwischen einem Zuordnungsmodus der REG und der Aggregationsebene von Kandidatensteuerkanälen umfasst.

11. Endgerät nach Anspruch 8, wobei die Blinddetektionsinformationen ferner eine Länge von DCI umfassen, wobei die DCI ein Ressourcenzuweisungs-, RA-, Feld umfassen und die Blinddetektionsinformationen ferner eine Länge des RA-Felds umfassen; wobei das Endgerät ferner ein Felderfassungsmodul (1004) umfasst, das dazu konfiguriert ist, die Länge des RA-Felds auf Grundlage einer zweiten Entsprechungsbeziehung zwischen der Länge der DCI und der Länge des RA-Felds zu erfassen; und
das Empfangsmodul (1003) ferner konfiguriert ist zum: Empfangen, auf Grundlage der Länge der DCI und der Länge des RA-Feldes, der DCI, die durch die netzwerkseitige Vorrichtung auf dem Steuerressourcensatz übertragen werden.

12. Endgerät nach einem der Ansprüche 8 bis 11, ferner umfassend:
ein Konfigurationsinformationserfassungsmodul (1005), das dazu konfiguriert, auf Grundlage einer dritten Entsprechungsbeziehung zwischen den Ressourcenkonfigurationsinformationen und Konfigurationsinformationen eines physikalischen gemeinsamen Downlink-Kanals, PDSCH, Konfigurationsinformationen des PDSCH zur Übertragung von Daten zu bestimmen, wobei die Konfigurationsinformationen des PDSCH mindestens eines von einer Empfangsbandbreite des PDSCH, Positionsinformationen des PDSCH, einer Größe einer Ressourcenblockgruppe, RBG, zur Übertragung des PDSCH umfassen; wobei die Positionsinformationen des PDSCH eine Startsymbolposition und/oder eine Endsymbolposition des PDSCH umfassen;
das Empfangsmodul (1003) ferner konfiguriert ist zum: Empfangen, auf Grundlage der Konfigurationsinformationen des PDSCH und der DCI, von Daten, die auf dem PDSCH übertragen werden.

13. Netzwerkseitige Vorrichtung, umfassend:
ein erstes Übertragungsmodul (1201), das dazu konfiguriert ist, erste Entsprechungsbeziehungskonfigurationsinformationen an ein Endgerät zu übertragen, wobei die ersten Entsprechungsbeziehungskonfigurationsinformationen eine erste Entsprechungsbeziehung zwischen Blinddetektionsinformationen und Ressourcenkonfigurationsinformationen eines Ressourcensteuersatzes zur Übertragung von Downlink-Steuerinformationen, DCI, umfassen, wobei die Blinddetektionsinformationen eine Aggregationsebene von Kandidatensteuerkanälen umfassen; und
ein zweites Übertragungsmodul (1202), das dazu konfiguriert ist, die DCI an das Endgerät auf dem Steuerressourcensatz zu übertragen,
wobei die Ressourcenkonfigurationsinformationen eine Kennung des Steuerressourcensatzes umfassen und die erste Entsprechungsbeziehung eine Entsprechungsbeziehung zwischen einer Kennung eines Steuerressourcensatzes und der Aggregationsebene von Kandidatensteuerkanälen umfasst, wobei die Kennung des Steuerressourcensatzes verwendet wird, um eine Zeitdomänenposition und/oder eine Frequenzdomänenposition des Steuerressourcensatzes anzugeben.

14. Netzwerkseitige Vorrichtung nach Anspruch 13, wobei eine oder beide der folgenden Bedingungen (i) und (ii) zutreffen:
(i) die Ressourcenkonfigurationsinformationen einen Verschachtelungsmodus einer Ressourcenelementgruppe, REG, in dem Steuerressourcensatz umfassen, die erste Entsprechungsbeziehung eine Entsprechungsbeziehung zwischen dem Verschachtelungsmodus der REG und der Aggregationsebene von Kandidatensteuerkanälen umfasst;
(ii) die Ressourcenkonfigurationsinformationen einen Zuordnungsmodus einer Ressourcenelementgruppe, REG, in dem Steuerressourcensatz umfassen, die erste Entsprechungsbeziehung umfasst: eine Entsprechungsbeziehung zwischen einem Zuordnungsmodus der REG und der Aggregationsebene von Kandidatensteuerkanälen.

15. Netzwerkseitige Vorrichtung nach Anspruch 13, wobei die Blinddetektionsinformationen ferner eine Länge von DCI umfassen, wobei die DCI ein Ressourcenzuweisungs-, RA-, Feld umfassen und die Blinddetektionsinformationen ferner eine Länge des RA-Felds umfassen;
das erste Übertragungsmodul (1201) ferner konfiguriert ist, zum: Übertragen von zweiten Entsprechungsbeziehungskonfigurationsinformationen an das Endgerät, wobei die zweiten Entsprechungsbeziehungskonfigurationsinformationen eine zweite Entsprechungsbeziehung zwischen der Länge der DCI und der Länge des RA-Felds umfassen.

## Revendications

1. Procédé de transmission d'informations de commande de liaison descendante, comprenant :
déterminer (S701, S901), par un terminal, des informations de configuration de ressources correspondant à un ensemble de ressources de commande ; acquérir (S702), par le terminal, des informations de détection à l'aveugle sur la base d'une première relation de correspondance entre les informations de configuration de ressources et les informations de détection à l'aveugle, dans lequel les informations de détection à l'aveugle comprennent un niveau d'agrégation de canaux de commande candidats ; et
recevoir (S703), par le terminal, sur la base des informations de détection à l'aveugle, des informations de commande de liaison descendante, DCI, transmises par le dispositif côté réseau sur l'ensemble de ressources de commande,
dans lequel les informations de configuration de ressources comprennent un identifiant de l'ensemble de ressources de commande, et la première relation de correspondance comprend une relation de correspondance entre un identifiant d'un ensemble de ressources de commande et le niveau d'agrégation des canaux de commande candidats,
dans lequel l'identifiant de l'ensemble de ressources de commande est utilisé pour indiquer une position de domaine temporel et/ou une position de domaine fréquentiel de l'ensemble de ressources de commande.

2. Procédé selon la revendication 1, dans lequel, avant l'acquisition (S702), par le terminal, des informations de détection à l'aveugle sur la base de la première relation de correspondance entre les informations de configuration de ressources et les informations de détection à l'aveugle, le procédé comprend en outre : recevoir, par le terminal, des premières informations de configuration de relation de correspondance transmises par le dispositif côté réseau, dans lequel les premières informations de configuration de relation de correspondance comprennent la première relation de correspondance.

3. Procédé selon la revendication 1, dans lequel l'une ou les deux conditions suivantes (i) et (ii) s'appliquent :
(i) les informations de configuration de ressources comprennent un mode d'entrelacement d'un groupe d'éléments de ressource, REG, dans l'ensemble de ressources de commande, et la première relation de correspondance comprend une relation de correspondance entre le mode d'entrelacement du REG et le niveau d'agrégation des canaux de commande candidats ;
(ii) les informations de configuration de ressources comprennent un mode de mappage d'un groupe d'éléments de ressource, REG, dans l'ensemble de ressources de commande, et la première relation de correspondance comprend une relation de correspondance entre un mode de mappage du REG et le niveau d'agrégation des canaux de commande candidats.

4. Procédé selon la revendication 1, dans lequel les informations de détection à l'aveugle comprennent en outre une longueur de DCI, dans lequel les DCI comprennent un champ d'attribution de ressources, RA, et les informations de détection à l'aveugle comprennent en outre une longueur du champ RA ; après l'acquisition (S702), par le terminal, des informations de détection à l'aveugle sur la base de la première relation de correspondance entre les informations de configuration de ressources et les informations de détection à l'aveugle, le procédé comprend en outre :
acquérir, par le terminal, la longueur du champ RA sur la base d'une deuxième relation de correspondance entre la longueur des DCI et la longueur du champ RA ;
recevoir (S703), par le terminal, sur la base des informations de détection à l'aveugle, des DCI transmises par le dispositif côté réseau sur l'ensemble de ressources de commande comprend :
recevoir, par le terminal, sur la base de la longueur des DCI et de la longueur du champ RA, des DCI transmises par le dispositif côté réseau sur l'ensemble de ressources de commande.

5. Procédé selon l'une quelconque des revendications 1 à 4, dans lequel,
après détermination (S701, S901), par le terminal, des informations de configuration de ressources correspondant à l'ensemble de ressources de commande, le procédé comprend en outre :
déterminer (S902), par le terminal, sur la base d'une troisième relation de correspondance entre les informations de configuration de ressources et les informations de configuration d'un canal physique partagé de liaison descendante, PDSCH, des informations de configuration du PDSCH pour la transmission de données, dans lequel les informations de configuration du PDSCH comprennent au moins l'un des éléments parmi une bande passante de réception du PDSCH, des informations de position du PDSCH, une taille d'un groupe de blocs de ressources, RBG, pour la transmission du PDSCH ; les informations de position du PDSCH comprennent une position de symbole de début et/ou une position de symbole de fin du PDSCH ;
après réception (S703), par le terminal, sur la base des informations de détection à l'aveugle, des DCI transmises par le dispositif côté réseau sur l'ensemble de ressources de commande, le procédé comprend en outre : recevoir (S903), par le terminal, sur la base des informations de configuration du PDSCH et des DCI, des données transmises sur le PDSCH.

6. Procédé de transmission d'informations de commande de liaison descendante, comprenant :
transmettre (S801), par un dispositif côté réseau, des premières informations de configuration de relation de correspondance à un terminal, dans lequel les premières informations de configuration de relation de correspondance comprennent une première relation de correspondance entre des informations de détection à l'aveugle et des informations de configuration de ressources d'un ensemble de commande de ressources destiné à la transmission d'informations de commande de liaison descendante, DCI, les informations de détection à l'aveugle comprennent un niveau d'agrégation de canaux de commande candidats ; et
transmettre (S802), par le dispositif côté réseau, des DCI vers le terminal sur l'ensemble de ressources de commande,
dans lequel les informations de configuration de ressources comprennent un identifiant de l'ensemble de ressources de commande, et la première relation de correspondance comprend une relation de correspondance entre un identifiant d'un ensemble de ressources de commande et le niveau d'agrégation des canaux de commande candidats,
dans lequel l'identifiant de l'ensemble de ressources de commande est utilisé pour indiquer une position de domaine temporel et/ou une position de domaine fréquentiel de l'ensemble de ressources de commande.

7. Procédé selon la revendication 6, dans lequel l'une ou les deux conditions suivantes (i) et (ii) s'appliquent :
(i) les informations de configuration de ressources comprennent un mode d'entrelacement d'un groupe d'éléments de ressource, REG, dans l'ensemble de ressources de commande, et la première relation de correspondance comprend une relation de correspondance entre le mode d'entrelacement du REG et le niveau d'agrégation des canaux de commande candidats ;
(ii) les informations de configuration de ressources comprennent un mode de mappage d'un groupe d'éléments de ressource, REG, dans l'ensemble de ressources de commande, la première relation de correspondance comprend une relation de correspondance entre un mode de mappage du REG et le niveau d'agrégation des canaux de commande candidats.

8. Terminal, comprenant :
un module de traitement (1001), configuré pour déterminer des informations de configuration de ressources correspondant à un ensemble de ressources de commande ;
un module d'acquisition (1002) d'informations de détection à l'aveugle, configuré pour acquérir des informations de détection à l'aveugle sur la base d'une première relation de correspondance entre les informations de configuration de ressources et les informations de détection à l'aveugle, dans lequel les informations de détection à l'aveugle comprennent un niveau d'agrégation de canaux de commande candidats ; et un module de réception (1003), configuré pour recevoir, sur la base des informations de détection à l'aveugle, des informations de commande de liaison descendante, DCI, transmises par le dispositif côté réseau sur l'ensemble de ressources de commande,
dans lequel les informations de configuration de ressources comprennent un identifiant de l'ensemble de ressources de commande, la première relation de correspondance comprend une relation de correspondance entre un identifiant d'un ensemble de ressources de commande et le niveau d'agrégation des canaux de commande candidats,
dans lequel l'identifiant de l'ensemble de ressources de commande est utilisé pour indiquer une position de domaine temporel et/ou une position de domaine fréquentiel de l'ensemble de ressources de commande.

9. Terminal selon la revendication 8, dans lequel le module de réception (1003) est en outre configuré pour recevoir des premières informations de configuration de relation de correspondance transmises par le dispositif côté réseau, dans lequel les premières informations de configuration de relation de correspondance comprennent la première relation de correspondance.

10. Terminal selon la revendication 8, dans lequel l'une ou les deux conditions suivantes (i) et (ii) s'appliquent :
(i) les informations de configuration de ressources comprennent un mode d'entrelacement d'un groupe d'éléments de ressource, REG, dans l'ensemble de ressources de commande, la première relation de correspondance comprend une relation de correspondance entre le mode d'entrelacement du REG et le niveau d'agrégation des canaux de commande candidats ;
(ii) les informations de configuration de ressources comprennent un mode de mappage d'un groupe d'éléments de ressource, REG, dans l'ensemble de ressources de commande, et la première relation de correspondance comprend une relation de correspondance entre un mode de mappage du REG et le niveau d'agrégation des canaux de commande candidats.

11. Terminal selon la revendication 8, dans lequel les informations de détection à l'aveugle comprennent en outre une longueur de DCI, dans lequel les DCI comprennent un champ d'attribution de ressources, RA, et les informations de détection à l'aveugle comprennent en outre une longueur du champ RA ; le terminal comprend en outre un module d'acquisition (1004) de champ, configuré pour acquérir la longueur du champ RA sur la base d'une deuxième relation de correspondance entre la longueur des DCI et la longueur du champ RA ; et
le module de réception (1003) est en outre configuré pour : recevoir, sur la base de la longueur des DCI et de la longueur du champ RA, les DCI transmises par le dispositif côté réseau sur l'ensemble de ressources de commande.

12. Terminal selon l'une quelconque des revendications 8 à 11, comprenant en outre :
un module d'acquisition (1005) d'informations de configuration, conçu pour déterminer, sur la base d'une troisième relation de correspondance entre les informations de configuration de ressources et les informations de configuration d'un canal physique partagé de liaison descendante, PDSCH, des informations de configuration du PDSCH pour la transmission de données, dans lequel les informations de configuration du PDSCH comprennent au moins l'un des éléments parmi une bande passante de réception du PDSCH, des informations de position du PDSCH, une taille d'un groupe de blocs de ressources RBG pour la transmission du PDSCH ; les informations de position du PDSCH comprennent une position de symbole de début et/ou une position de symbole de fin du PDSCH ;
le module de réception (1003) est en outre configuré pour : recevoir, sur la base des informations de configuration du PDSCH et des DCI, des données transmises sur le PDSCH.

13. Dispositif côté réseau, comprenant :
un premier module de transmission (1201), conçu pour transmettre des premières informations de configuration de relation de correspondance à un terminal, dans lequel les premières informations de configuration de relation de correspondance comprennent une première relation de correspondance entre des informations de détection à l'aveugle et des informations de configuration de ressources d'un ensemble de commande de ressources destiné à la transmission d'informations de commande de liaison descendante, DCI, les informations de détection à l'aveugle comprennent un niveau d'agrégation de canaux de commande candidats ; et
un second module de transmission (1202), configuré pour transmettre les DCI au terminal sur l'ensemble de ressources de commande,
dans lequel les informations de configuration de ressources comprennent un identifiant de l'ensemble de ressources de commande, et la première relation de correspondance comprend une relation de correspondance entre un identifiant d'un ensemble de ressources de commande et le niveau d'agrégation des canaux de commande candidats, dans lequel l'identifiant de l'ensemble de ressources de commande est utilisé pour indiquer une position de domaine temporel et/ou une position de domaine fréquentiel de l'ensemble de ressources de commande.

14. Dispositif côté réseau selon la revendication 13, dans lequel l'une ou les deux conditions suivantes (i) et (ii) s'appliquent :
(i) les informations de configuration de ressources comprennent un mode d'entrelacement d'un groupe d'éléments de ressource, REG, dans l'ensemble de ressources de commande, la première relation de correspondance comprend une relation de correspondance entre le mode d'entrelacement du REG et le niveau d'agrégation des canaux de commande candidats ;
(ii) les informations de configuration de ressources comprennent un mode de mappage d'un groupe d'éléments de ressource, REG, dans l'ensemble de ressources de commande, la première relation de correspondance comprend une relation de correspondance entre un mode de mappage du REG et le niveau d'agrégation des canaux de commande candidats.

15. Dispositif côté réseau selon la revendication 13, dans lequel les informations de détection à l'aveugle comprennent en outre une longueur de DCI, dans lequel les DCI comprennent un champ d'attribution de ressources, RA, et les informations de détection à l'aveugle comprennent en outre une longueur du champ RA ;
le premier module de transmission (1201) est en outre configuré pour : transmettre des secondes informations de configuration de relation de correspondance au terminal, dans lequel les secondes informations de configuration de relation de correspondance comprennent une deuxième relation de correspondance entre la longueur des DCI et la longueur du champ RA.
